# EUROPÄISCHE PATENTSCHRIFT

(11) **EP 4 367 010 B1**
(45) Veröffentlichungstag und Bekanntmachung des Hinweises auf die Patenterteilung: **03.09.2025**
(21) Anmeldenummer: 22755077.9
(22) Anmeldetag: 04.07.2022
(51) Int. Cl.: B62M 6/45, B62J 45/411, B62J 45/413

(54) **VORRICHTUNG UND VERFAHREN ZUR STEUERUNG EINES HILFSANTRIEBS EINES MIT EINER MECHANISCHEN GANGSCHALTUNG VERSEHENEN FAHRRADES SOWIE HILFSANTRIEB UND FAHRRAD**
DEVICE AND METHOD FOR CONTROLLING AN AUXILIARY DRIVE OF A BICYCLE PROVIDED WITH A MECHANICAL TRANSMISSION, AS WELL AS AUXILIARY DRIVE AND BICYCLE
DISPOSITIF ET PROCÉDÉ DE COMMANDE D'UN ENTRAÎNEMENT AUXILIAIRE D'UNE BICYCLETTE POURVUE D'UN CHANGEMENT DE VITESSE MÉCANIQUE, ET ENTRAÎNEMENT AUXILIAIRE ET BICYCLETTE

(30) Priorität: 05.07.2021 DE 102021117309
(43) Veröffentlichungstag der Anmeldung: 15.05.2024
(73) Patentinhaber: Nicolai, Karlheinz, 31089 Duingen Lübbrechtsen (DE)
(72) Erfinder: Nicolai, Karlheinz, 31089 Duingen Lübbrechtsen (DE)
(74) Vertreter: Grünecker Patent- und Rechtsanwälte PartG mbB
(86) Internationale Anmeldenummer: PCT/EP2022/068377
(87) Internationale Veröffentlichungsnummer: WO 2023/280743

(56) Entgegenhaltungen:
- EP-A1- 3 392 128
- DE-A1- 102014 000 925
- US-A1- 2014 353 055

## Beschreibung

Die Erfindung betrifft eine Vorrichtung und ein Verfahren, mit dem ein Hilfsantrieb eines mit einer mechanischen Gangschaltung versehenen Fahrrades gesteuert werden kann. Insbesondere betrifft die Erfindung eine Computervorrichtung und ein computerimplementiertes Verfahren für eine solche Steuerung.

Fahrräder mit Hilfsantrieb in Form insbesondere eines elektrischen Motors sind bekannt.

Die EP 3 392 128 A1 offenbart ein Fahrrad mit einem geschwindigkeits- oder drehmomentbasiertes Steuersystem. Es kann ein Geschwindigkeits- oder Drehmomentsensor vorgesehen sein, der eine Betriebskenngröße des Fahrrads erfasst. Ein Signal des Geschwindigkeits- oder Drehmomentsensors kann zur Bestimmung der mechanischen Grenzen eines CVT-Bereichs und zur Bestimmung, wann ein Elektromotor zugeschaltet werden soll, verwendet werden. EP 3 392 128 A1 offenbart alle Merkmale des Oberbegriffs von Anspruch 1.

Die Erfindung setzt sich zum Ziel, die Einsatzmöglichkeiten solcher Fahrräder zu verbessern. Gelöst wird diese Aufgabe erfindungsgemäß durch eine Computervorrichtung zur Steuerung eines Hilfsantriebs eines mit einer mechanischen Gangschaltung versehenen Fahrrades, wobei die Computervorrichtung ausgestaltet ist, die folgenden Schritte auszuführen: Empfangen von Drehmomentdaten, die repräsentativ für ein von einem Radfahrer erzeugtes Drehmoment sind; Empfangen von Trittfrequenzdaten, die repräsentativ für eine Trittfrequenz des Radfahrers sind; Ermitteln einer Unterstützungsleistung in Abhängigkeit von den Drehmomentdaten, den Trittfrequenzdaten und einer in der Computervorrichtung gespeicherten Fahrradtypen-Emulationskurve; und Ausgeben von Steuerdaten für den Hilfsantrieb, wobei die Steuerdaten repräsentativ sind für die Erzeugung der Unterstützungsleistung durch den Hilfsantrieb.

Die Erfindung betrifft weiterhin ein computerimplementiertes Verfahren zum Steuern eines Hilfsantriebs eines eine mechanische Gangschaltung aufweisenden Fahrrades, umfassend die folgenden Schritte: Empfangen von Drehmomentdaten, die repräsentativ für ein von einem Radfahrer erzeugtes Drehmoment sind; Empfangen von Trittfrequenzdaten, die repräsentativ für eine Trittfrequenz des Radfahrers sind; Ermitteln einer Unterstützungsleistung; und Ausgeben von Steuerdaten für den Hilfsantrieb, die repräsentativ sind für die Erzeugung der Unterstützungsleistung durch den Hilfsantrieb; dadurch gekennzeichnet, dass die Unterstützungsleistung in Abhängigkeit von den Drehmomentdaten, den Trittfrequenzdaten und einer in der Computervorrichtung gespeicherten Fahrradtypen-Emulationskurve ermittelt wird.

Mit der Fahrradtypen-Emulationskurve ist es möglich, die Unterstützungsleistung, die der Hilfsantrieb der Tretleistung des Radfahrers hinzufügt, in Abhängigkeit von den Drehmomentdaten und den Trittfrequenzdaten so zu steuern, dass am Hinterrad des Fahrrads eine gewünschte Abtriebsleistung vorliegt. Die Fahrradtypen-Emulationskurve kann dabei als eine ein- oder mehrdimensionale Zuordnung angesehen werden, die die eigentliche von der Konfiguration des Fahrrads vorgegebene Charakteristik auf eine von der Fahrradtypen-Emulationskurve vorgegebene andere Charakteristik abbildet. Jeder Kombination von Trittfrequenz- bzw. Trittfrequenzdaten und vom Radfahrer erzeugten Drehmoment bzw. den Drehmomentdaten und gegebenenfalls weiteren gemessenen, abgelegten oder berechneten Parametern wird eine Unterstützungsleistung zuordnet. Mit Hilfe der Fahrradtypen-Emulationskurve verhält sich das mit der erfindungsgemäßen Computervorrichtung und/oder dem erfindungsgemäßen Verfahren ausgestattete Fahrrad mit Hilfsantrieb wie ein anderes Fahrrad.

Die Computervorrichtung kann auf diese Weise einen Emulator für ein anders gebautes Fahrrad darstellen, das beispielsweise andere antriebsleistungsbeeinflussende Bauteile, eine andere antriebsleistungsbeeinflussende Konfiguration und/oder Form aufweist. Selbst andere Fahrer lassen sich emulieren bzw. simulieren. In einem solchen Fall ist die Fahrradtypen-Emulationskurve repräsentativ für den Unterschied der Verlustleistung von Komponenten des Fahrrads, an dem sich die Computervorrichtung befindet, zu der Verlustleistung anderer Komponenten eines zu emulierenden Fahrrads.

Im Folgenden sind jeweils für sich vorteilhafte, voneinander unabhängige und beliebig miteinander kombinierbare Weiterbildungen der Erfindung beschrieben. Diese Weiterbildungen können unabhängig vom Kontext, in dem sie beschrieben sind, jeweils bei der Vorrichtung und/oder beim Verfahren eingesetzt werden.

So kann die Fahrradtypen-Emulationskurve als analytische und/oder rekursive Formel oder als Lookup-Tabelle in der Computervorrichtung gespeichert sein. Die Computervorrichtung kann einen Speicher aufweisen, in dem die Fahrradtypen-Emulationskurve gespeichert ist. Die Computervorrichtung kann weitere elektronische Bauteile wie einen oder mehrere insbesondere programmierbare Mikroprozessoren und/oder ASICS aufweisen.

Die Drehmomentdaten und/oder die Trittfrequenzdaten können momentane Werte oder gemittelte Werte, beispielsweise ein Drei-Sekunden- oder Zehn-Sekunden-Mittel, darstellen.

Die Unterstützungsleistung wird durch die Steuerdaten repräsentiert. Die Steuerdaten können grundsätzlich repräsentativ sein für eine positive Unterstützungsleistung oder eine negative Unterstützungsleistung. Eine positive Unterstützungsleistung entspricht dabei dem Einspeisen einer Leistung durch den Hilfsantrieb zusätzlich zur Tretleistung. Der Hilfsantrieb arbeitet hierbei im Motorbetrieb. Eine negative Unterstützungsleistung ist repräsentativ ist eine Absorption der Tretleistung. Der Hilfsantrieb arbeitet hierbei im Generatorbetrieb.

Bei einer negativen Unterstützungsleistung ist die Antriebsleistung an den Hinterrädern auch unter Berücksichtigung von Verlusten zwischen der Stelle, an der die Unterstützungsleistung der Tretleistung hinzugefügt wird und dem Hinterrad, kleiner als die Tretleistung. Eine negative Unterstützungsleistung kann beispielsweise erforderlich sein, wenn ein schwerer durchtrainierter Radfahrer einen leichtgewichtigen untrainierten Radfahrer bei Fahrt in einer Ebene simulieren möchte, dessen auf das Körpergewicht bezogene Tretleistung kleiner ist.

Um beispielsweise eine andere als die beim Fahrrad tatsächlich verbaute mechanische Gangschaltung zu emulieren, kann die Fahrradtypen-Emulationskurve den Unterschied zwischen den Verlusten einer zu emulierenden Kettenschaltung und den Verlusten der tatsächlich verbauten Gangschaltung repräsentieren. Wenn an dieser Stelle von Verlusten die Rede ist , so sind insbesondere statische und dynamische Reibungs- und Trägheitsverluste gemeint. Die Fahrrad-Emulationskurve ordnet folglich einer Kombination von Drehmoment und Trittfrequenz eine Unterstützungsleistung zu, die die unterschiedlichen Verluste der beiden unterschiedlichen Gangschaltungen kompensiert. Die Fahrrad-Emulationskurve repräsentiert in diesem Fall eine Gangschaltungscharakteristik, die einer bestimmten Kombination von Trittfrequenzdaten, Tretmomentdaten und gegebenenfalls für das derzeit eingestellte Übersetzungsverhältnis repräsentative Schaltungsdaten eine Unterstützungsleistung bevorzugt eindeutig zuordnet. Bei dieser Ausgestaltung ist es somit beispielsweise möglich, ein Elektrofahrrad mit Tretlagerschaltung oder Nabenschaltung zu bauen , welches sich in Bezug auf Wirkungsgrad und Massenträgheit ähnlich anfühlt wie ein Fahrrad mit Kettenschaltung.

Die Gangschaltungscharakteristik kann repräsentativ für einen gangabhängigen, tretleistungsabhängigen und/oder trittfrequenzabhängigen Leistungsverlust und der Gangschaltung des Fahrrades mit der Computervorrichtung, eines zu emulierenden Fahrrades mit einer anderen Gangschaltung oder repräsentativ für die Differenz der Leistungsverluste der Gangschaltung des Fahrrads mit der Computervorrichtung und einer anderen, zu emulierenden Gangschaltung sein. Die Gangschaltung-Leistungsverluste können abhängig vom momentanen Übersetzungsverhältnis, von der Trittfrequenz und/oder der Tretleistung sein. Der Leistungsverlust entspricht einer Verlustleistung, die von einer Ausgangsleistung abzuziehen ist.

So kann beispielsweise das Fahrrad, wenn es mit einer Tretlagerschaltung ausgestattet ist, eine Kettenschaltung, eine Nabenschaltung oder eine Single-Speed Schaltung emulieren. Hierzu werden anhand der Fahrradtypen-Emulationskurve die höhere Verluste der Tretlagerschaltung durch die Unterstützungsleistung ausgeglichen. Ist das Fahrrad mit einer Gangschaltung versehen, die geringere Verluste aufweist als die zu emulierende Gangschaltung, so kann die Unterstützungsleistung auch negativ sein, der Hilfsantrieb also als Generator betrieben sein.

Unabhängig davon, welche Verlustcharakteristiken in einer Fahrradtypen-Emulationskurve repräsentiert sind, kann die Fahrradtypen-Emulationskurve relative oder absolute Verlustleistungen repräsentieren. Bei einer absoluten Verlustleistung wird die Unterstützungsleistung so gesteuert, dass die von der in der Fahrradtypen-Emulationskurve repräsentierte Verlustleistung vollständig kompensiert wird. Die Computervorrichtung und/oder das Verfahren emulieren ein Fahrrad mit einer diesbezüglich verlustfreien Komponenten, beispielsweise ein Fahrrad ohne Gangschaltung. Bei einer relativen Verlustleistung wird die Unterstützungsleistung so gesteuert, dass nur die Differenz der Verlustleistungen der unterschiedlichen, in der Fahrradtypen-Emulationskurve repräsentierten Komponenten kompensiert wird. Die Computervorrichtung und/oder das Verfahren emulieren ein Fahrrad mit einer anderen als der verbauten Komponente.

Die Fahrradtypen-Emulationskurve kann auch repräsentativ sein für die Verluste unterschiedlicher Zugmittel zur Leistungsübertragung. So kann die Fahrradtypen-Emulationskurve repräsentativ sein für die Unterschiede in der Übertragungsfunktion zwischen einem Kettenantrieb und einem Riemenantrieb. Ein mit einem Riemenantrieb ausgestattetes Fahrrad lässt sich bei einer solchen Ausgestaltung fahren wie ein Fahrrad mit Kettenantrieb.

Auch ist es möglich, verschleißabhängige Verluste auszugleichen, wenn diese Verluste als Funktion über die Betriebsdauer in der Fahrradtypen-Emulationskurve abgelegt sind. Ist beispielsweise der Kettenantrieb des Fahrrades verschlissen, kann die Unterstützungsleistung so dosiert sein, dass die Verluste gegenüber einem neuwertigen Kettenantrieb ausgeglichen werden. Die Fahrradtypen-Emulationskurve ist in so einem Fall beispielsweise repräsentativ für eine Antriebscharakteristik, in der einer Kombination von Trittfrequenzdaten, Tretmomentdaten, Tretleistungsdaten und/oder einer Betriebszeit eine bestimmte Unterstützungsleistung zuordnet. Die Unterstützungsleistung ist durch die Steuerdaten repräsentiert.

Die Fahrradtypen-Emulationskurve kann beispielsweise repräsentativ sein für die absoluten Verluste der beim Fahrrad verbauten Gangschaltung und/oder Zugmittel. In diesem Fall werden durch die Unterstützungsleistung die Verluste genau dieser Antriebskomponenten kompensiert.

Die Fahrradtypen-Emulationskurve kann auch repräsentativ sein für den Rollwiderstand der Reifen, die bei dem mit der Computervorrichtung ausgestatteten Fahrrad vorhanden sind und auf diese Weise eine absolute Rollwiderstandcharakteristik repräsentieren. Die Fahrrrad-Emulationskurve kann auch eine relative Rollwiderstandscharakteristik repräsentieren, in der die Differenz der Rollwiderstände zweier unterschiedlicher Reifen enthalten ist. So kann beispielsweise die Fahrradtypen-Emulationskurve repräsentativ sein für Unterschiede in den Rollwiderständen eines Tourenreifens und eines Rennradreifens, oder eines Rennradreifens und eines Mountainbike-Reifens. Unterschiedliche Reifentypen, zum Beispiel bestimmte Reifen bestimmter Hersteller können ebenfalls in der Fahrradtypen-Emulationskurve repräsentiert sein. Die Unterstützungsleistung kann in diesem Fall so bemessen sein, dass für den Fahrer zumindest hinsichtlich der von ihm zu erzeugenden Leistung der Eindruck entsteht, die zu emulierenden Reifen zu fahren.

Die Rollwiderstandsdaten sind bevorzugt repräsentativ für den Rollwiderstand bzw. eine Rollwiderstandscharakteristik eines anderen, zu emulierenden Reifentyps oder repräsentativ für den Reifentyp des Fahrrades mit der Computervorrichtung oder repräsentativ für eine Differenz zwischen dem Rollwiderstand des Reifentyps des Fahrrads und des zu emulierenden Reifentyps des anderen, emulierten Fahrrades. Damit lassen sich unterschiedliche Reifentypen wie oben erläutert simulieren. Die Rollwiderstandscharakteristik ordnet beispielsweise einer beliebigen, aber vorbestimmten Kombination von Gewichtsdaten, die repräsentativ für ein System-, Fahrrad-, Rahmen-, Laufrad- und/oder Fahrergewicht sind, Luftdruckdaten, die repräsentativ für einen Reifenluftdruck sind, und/oder Fahrgeschwindigkeitsdaten, die repräsentativ sind für eine Fahrgeschwindigkeit des Fahrrads eine bestimmte, bevorzugt eindeutige Unterstützungsleistung zu.

Die Computervorrichtung und/oder das Verfahren können in einer weiteren vorteilhaften Ausgestaltung ausgebildet sein, den folgenden Schritt durchzuführen: Ermitteln der Unterstützungsleistung auch in Abhängigkeit von gespeicherten Rollwiderstandsdaten, die repräsentativ für den Rollwiderstand von momentan montierten Reifen des Fahrrades sind. Die Rollwiderstandsdaten können Teil der Fahrradtypen-Emulationskurve sein.

Die Fahrradtypen-Emulationskurve kann bei dieser Ausgestaltung insbesondere auch repräsentativ für den Unterschied der Rollwiderstände der momentan montierten Reifen und anderer vorbestimmten Reifen sein. Der Rollwiderstand der Reifen hat einen nicht unerheblichen Einfluss auf das Fahrgefühl. Durch Steuerung der Unterstützungsleistung auf eine Art, die unterschiedliche Rollwiederstände kompensiert, lassen sich so beispielsweise leichtgängigere Reifentypen simulieren. Zu Trainingszwecken lassen sich allerdings auch schwergängigere Reifentypen abbilden.

Die Fahrradtypen-Emulationskurve kann repräsentativ sein für einen Unterschied zwischen dem Luftwiderstand des Rahmens des Fahrrads, an dem sich die Computervorrichtung befindet, und einem zu emulierenden Rahmens. So kann die Fahrradtypen-Emulationskurve repräsentativ sein für den Unterschied in den Luftwiderständen des Fahrrads mit der Computervorrichtung und eines zu emulierenden Rahmens sein. Weist beispielsweise das mit der Computervorrichtung ausgestattete Fahrrad einen Tourenrahmen auf, so kann mit einer solchen Fahrradtypen-Emulationskurve der Luftwiderstand eines Triathlon- oder Zeitfahr-Rahmens, oder eine Mountainbikes emuliert werden. Wie bei den Reifen so können auch hier unterschiedliche Rahmen unterschiedlicher Hersteller berücksichtigt werden. Die Fahrradtypen-Emulationskurve repräsentiert in diesem Fall eine Luftwiderstandscharakteristik, in der beispielsweise die Unterstützungsleistung abhängig von Körpermaßen eines Radfahrers und/oder der Fahrgeschwindigkeit ermittelt wird. Die Unterstützungsleistung ist dabei von den Steuerdaten repräsentiert.

Ebenso kann eine Fahrradtypen-Emulationskurve auch die unterschiedlichen Luftwiderstände und/oder Massenträgheiten unterschiedlicher Laufradsätze repräsentieren. Wird die Unterstützungsleistung mit einer solchen Fahrradtypen-Emulationskurve gesteuert, so fährt sich das Fahrrad bezüglich der Tretleistung und des dynamischen Verhaltens wie ein Fahrrad mit anderen Laufrädern als den tatsächlich verbauten.

Die Fahrradtypen-Emulationskurve kann repräsentativ sein für einen Unterschied zwischen dem Luftwiderstand bzw. der Luftwiderstandsdaten des Radfahrers, der das Fahrrad mit der Computervorrichtung fährt, und einem anderen zu emulierenden Radfahrer, beispielsweise einen berühmten Radfahrer. Alternativ oder zusätzlich können auch die Luftwiderstände unterschiedlicher Sitzpositionen berücksichtigt werden. Die Unterstützungsleistung wird aufgrund einer solchen Fahrradtypen-Emulationskurve so gesteuert, dass zum Erreichen einer bestimmten Geschwindigkeit der Radfahrer dieselbe Leistung aufbringen müsste wie in einer anderen Sitzposition.

Eine weitere vorteilhafte Ausgestaltung sieht vor, Computervorrichtung und/oder Verfahren auszugestalten, den folgenden Schritt durchzuführen: Ermitteln der Unterstützungsleistung auch in Abhängigkeit von Luftwiderstandsdaten, die repräsentativ sind für den Luftwiderstand des Fahrrades, des Rahmens, des Radfahrers und/oder eines Laufradsatzes. Die Luftwiderstandsdaten sind insbesondere ein Bestandteil der Luftwiderstandscharakteristik.

Die Luftwiderstandsdaten sind dabei bevorzugt repräsentativ für insbesondere fahrgeschwindigkeitsabhängige und/oder fahrradtypen- und/oder körpermaßabhängige Luftwiderstandsdaten eines Fahrradtyps, eines Rahmens, von Laufrädern, Reifen oder eines Radfahrers sein, entweder des Fahrrades mit der Computervorrichtung oder eines anderen, zu emulierenden Fahrrades. Die Luftwiderstandsdaten können ferner repräsentativ sein für eine Differenz dieser Luftwiderstandsdaten einerseits des Fahrrades mit der Computervorrichtung bzw. dessen Radfahrers und andererseits eines anderen, zu emulierenden Fahrrades bzw. dessen Radfahrers. Wie bereits oben erwähnt, lassen sich dadurch unterschiedliche Fahrradtypen und Radfahrer simulieren.

Wie die aerodynamisch optimierten Rahmen von Triathlon- und Zeitfahr-Rädern sowie aerodynamisch ausgestaltete Felgen zeigen, trägt die Luftwiderstandscharakteristik des Fahrradrahmens und/oder der Räder nicht unerheblich zu den Verlustleistungen bei. Repräsentiert die Fahrradtypen-Emulationskurve den Unterschied der aerodynamischen Verlustleistung des Fahrrades, insbesondere des Fahrradrahmens und/oder der Laufräder, des Fahrrades mit der Computervorrichtung und eines Fahrrades mit einem anders ausgestalteten Fahrradrahmen und/oder anderen Laufrädern, so lässt sich dieser andere Fahrradrahmen und/oder dieser andere Laufradsatz emulieren. So kann beispielsweise durch die Steuerung der Unterstützungsleistung auf einem normalen Tourenrad ein Triathlon- oder Zeitfahr-Rad hinsichtlich seiner Aerodynamik simuliert werden.

Die Fahrradtypen-Emulationskurve kann auch eine Trägheitscharakteristik repräsentieren. Die Trägheitscharakteristik kann repräsentativ sein für das trägheitsbedingte dynamische Verhalten aufgrund des Fahrrad- und/oder Radfahrergewichts. Dabei können translatorische und/oder rotatorische Trägheiten bzw. Trägheitsmomente berücksichtigt sein.

So kann beispielsweise mithilfe einer relativen Trägheitscharakteristik das Beschleunigungsverhalten beim Anfahren und/oder Bergauffahren eines leichteres (oder schwereres) Fahrrades und/oder eines leichteren (oder schwereren) Radfahrers emuliert werden. Gemäß einer weiteren Ausgestaltung der Computervorrichtung und/oder des Verfahrens kann die Unterstützungsleistung auch in Abhängigkeit von gespeicherten Fahrradgewichtsdaten, die repräsentativ für das Fahrradgewicht des Fahrrades und/oder des Radfahrers sind, ermittelt werden.

Die Trägheitscharakteristik kann auch repräsentativ sein für das trägheitsbedingte dynamische Verhalten aufgrund der Massen innerhalb des gesamten Transmissionssystems des Fahrrades.

Als Transmissionssystem seien an dieser Stelle alle Komponenten genannt, die durch den Radfahrer in Bewegung gesetzt werden. Das Transmissionssystem geht beispielsweise von den Pedalen über die Kurbeln bis in das Getriebe und dann über einen Riemen bis in das Hinterrad. Zusätzlich kann auch das Vorderrad in der Massenträgheit repräsentiert sein.

Die Fahrradtypen-Emulationskurve kann ferner repräsentativ sein für die Verlustcharakteristiken unterschiedlicher Hilfsantriebe. So kann die Fahrradtypen-Emulationskurve die Unterschiede in der Leistungsabgabe-Charakteristik des Hilfsantriebs des mit der Computervorrichtung versehenen Fahrrades und eines anderen, zu emulierenden Hilfsantriebs repräsentieren. Dies erleichtert beispielsweise einem Benutzer die Eingewöhnung an ein neues Fahrrad.

Die jeweilige Fahrradtypen-Emulationskurve kann analytisch und/oder empirisch bestimmt sein.

Die oben beschriebenen, unterschiedlichen Fahrradtypen-Emulationskurven können beliebig zu einer neuen kombinierten Fahrradtypen-Emulationskurve zusammengefügt sein. So kann beispielsweise eine Fahrradtypen-Emulationskurve die Kombination einer die unterschiedlichen Verlustleistungen zweier unterschiedlicher Gangschaltungen repräsentierenden Fahrradtypen-Emulationskurve und einer die unterschiedlichen Luftwiderstände unterschiedlicher Rahmen repräsentierenden Fahrradtypen-Emulationskurve sein.

Alle oben beschriebenen Fahrradtypen-Emulationskurve können von weiteren, im Betrieb des Fahrrades ermittelten Parametern abhängig sein, die dann ebenfalls zur Steuerung der Unterstützungsleistung herangezogen werden können. Dies ist im Folgenden kurz dargelegt.

In einer weiteren Ausgestaltung von Computervorrichtung und/oder Verfahren können folgenden Schritte ausgeführt werden: Ermitteln einer Tretleistung aus den Drehmomentdaten und den Trittfrequenzdaten; und Ermitteln der Unterstützungsleistung auch, also zusätzlich in Abhängigkeit von den Drehmomentdaten, den Trittfrequenzdaten und der Fahrradtypen-Emulationskurve sowie gegebenenfalls weiteren Parametern, der Tretleistung. Diese Ausgestaltung vereinfacht die Steuerung des Hilfsantriebes, wenn die zu emulierende Antriebsleistung, also die Summe aus Unterstützungsleistung und Tretleistung, unmittelbar von der Tretleistung abhängt.

Gemäß einer weiteren vorteilhaften Ausgestaltung kann vorgesehen sein, dass die Computervorrichtung und/oder das Verfahren ausgestaltet ist, den folgenden Schritt auszuführen: Ermitteln der Unterstützungsleistung auch in Abhängigkeit von Schaltungsdaten, die repräsentativ für ein momentanes Übersetzungsverhältnis, insbesondere für einen momentan eingelegten Gang, der Gangschaltung sind. Mit dieser Ausgestaltung ist es möglich, unterschiedliche Schaltungstypen exakter zu emulieren. So sind die Verlustleistungen in der Gangschaltung oftmals abhängig nicht nur von der Trittfrequenz und dem Drehmoment sondern auch dem Übersetzungsverhältnis.

Gemäß einer weiteren vorteilhaften Ausgestaltung sind die Computervorrichtung und/oder das Verfahren ausgestaltet, die Unterstützungsleistung auch in Abhängigkeit von gespeicherten Körperdaten, die repräsentativ für Körpermaße eines Radfahrers sind, zu berechnen. Die Körpermaße beinhalten dabei insbesondere wenigstens einen Körpermaßparameter aus der Gruppe Körpergewicht, Körpergröße, Schulterbreite.

Die Körpermaße des Radfahrers verursachen auf unterschiedlichste Weise Antriebsverluste. Zum einen tragen die Körpermaße, gegebenenfalls auch in Zusammenhang mit der Rahmenform, zum Luftwiderstand in einer bestimmten Sitzposition bei. Das Körpergewicht beeinflusst das Beschleunigungsverhalten sowie die Bergauf- und die Bergabfahrt.

Die Fahrradtypen-Emulationskurve kann repräsentativ sein für die Unterschiede des Luftwiderstandes des Radfahrers mit den gespeicherten Körperdaten in einer Sitzposition und eines vorbestimmten, zu emulierenden Radfahrers mit anderen Körperdaten ein derselben oder einer anderen Sitzposition. Wenn in einem solchen Fall die Fahrradtypen-Emulationskurve zusätzlich die Unterschiede der Verlustleistungen zwischen der Rahmenform, den Reifen und/oder Laufräder des Fahrrades mit der Computervorrichtung und eines vorbestimmten Fahrrads repräsentiert, ist es möglich, das Fahrverhalten eines bekannten professionellen Athleten auf dessen in Rennen eingesetzten Fahrrad nachzuempfinden.

Hierzu kann die Fahrradtypen-Emulationskurve auch eine Leistungscharakteristik repräsentieren, die der einer zu emulierenden Person, beispielsweise eines zu emulierenden professionellen Athleten entspricht.

Gemäß einer weiteren vorteilhaften Ausgestaltung kann die Computervorrichtung und/oder das Verfahren ausgestaltet sein, den folgenden Schritt auszuführen: Ermitteln der Unterstützungsleistung auch in Abhängigkeit von Fahrgeschwindigkeitsdaten, die repräsentativ für eine momentane Fahrgeschwindigkeit des Fahrrades sind. Diese Ausgestaltung ist von Vorteil, wenn in der Fahrradtypen-Emulationskurve eine geschwindigkeitsabhängige Verlustleistung repräsentiert ist, beispielsweise ein Luft- und/oder Rollwiderstand.

Des Weiteren ist es bei dieser Ausgestaltung möglich, gesetzliche Vorgaben zu berücksichtigen, indem beispielsweise die Unterstützungsleistung bei bestimmten Geschwindigkeiten auf gesetzliche vorgeschriebenen Werte begrenzt wird ist.

Insbesondere kann die Computervorrichtung bzw. das Verfahren ausgestaltet sein, die Unterstützungsleistung in Abhängigkeit von einer gespeicherten Grenzgeschwindigkeit zu ermitteln. Beispielsweise kann die Unterstützungsleistung bei Überschreiten der vorbestimmten Grenzgeschwindigkeit auf einen insbesondere gespeicherten Maximalwert begrenzt sein. So kann beispielsweise die Unterstützungsleistung bei Fahrgeschwindigkeiten von über 25 km/h so eingeregelt werden, dass ausschließlich die vom Menschen an den Pedalen bzw. durch Treten aufgebrachte Tretleistung am Hinterrad des Fahrzeugs auf die Straße übertragen wird, dies aber bevorzugt in der Höhe, in der die Tretleistung an der Tretlagerwelle anliegt.

In einer weiteren vorteilhaften Ausgestaltung können Computervorrichtung und/oder Verfahren ausgestaltet sein, den folgenden Schritt auszuführen: Begrenzen der Unterstützungsleistung auf einen vorbestimmten Maximalwert, insbesondere in Abhängigkeit von der Fahrgeschwindigkeit. Beispielsweise kann die Leistung, die am Hinterrad auf die Straße übertragen wird, unterhalb der vorbestimmten Grenzgeschwindigkeit (z.B. 25 km/h) genau der Summe der vom Menschen an den Pedalen aufgebrachte Tretleistung und einer konstanten Nenndauerleistung für den Zusatzantrieb entsprechen. Die konstante Nenndauerleistung kann aufgrund einer gesetzlichen Regelung vorgegeben sein. In Deutschland ist die konstante Nenndauerleistung beispielsweise durch gesetzlich Vorgaben auf 250 W begrenzt.

Der vorbestimmte Maximalwert der Unterstützungsleistung kann insbesondere auch eine Leerlaufleistung des Hilfsantriebes repräsentieren. Die Leerlaufleistung des Hilfsantriebes ist dabei insbesondere diejenige Leistung, die der Hilfsantrieb aufbringen muss, um mit der Tretbewegung mitzulaufen, ohne dass der Tretleistung zusätzliche Leistung hinzugefügt wird. Obwohl der Hilfsantrieb in der Leerlaufleistung Leistung abgibt, ist die Unterstützungsleistung Null. In der Leerlaufleistung kompensiert der Hilfsantrieb folglich gerade die Getriebeverluste bis zu der Stelle, an der Tretleistung und Unterstützungsleistung zusammengeführt sind. Abweichungen und +/- 5 % der Leerlaufleistung sollen dabei noch als der Leerlaufleistung des Hilfsantriebes entsprechend gelten.

Die Computervorrichtung und/oder das Verfahren können also ausgestaltet sein, bei Überschreiten der Grenzgeschwindigkeit die Unterstützungsleistung automatisch auf die Leerlaufleistung bzw. auf eine reine Kompensation der durch eine Fahrradtypen-Emulationskurve bestimmten Verluste beispielsweise in der Gangschaltung zu begrenzen.

Die Computervorrichtung kann einen Positionssensor, beispielsweise einen GPS-, GLONASS-und/oder GALILEO-Sensor aufweisen, um die Fahrgeschwindigkeitsdaten zu ermitteln. Alternativ kann das Fahrrad auch einen Geschwindigkeitssensor aufweisen, der ausgestaltet ist, die Fahrgeschwindigkeit anhand der Drehfrequenz eines Laufrades des Fahrrades und oder anhand von Trittfrequenz und momentanem Übersetzungsverhältnis der Gangschaltung zu ermitteln.

Die Computervorrichtung und/oder das Verfahren können ferner ausgestaltet sein, die folgenden Schritte auszuführen: Ermitteln der Unterstützungsleistung auch in Abhängigkeit von Steigungsdaten, die repräsentativ für die Steigung eines momentan befahrenes Gelände sind. Mit dieser Ausgestaltung lassen sich bei Bergauf- und Bergabfahrt unterschiedlich schwere Fahrer und/oder unterschiedlich schwere Fahrräder, Fahrradrahmen und/oder Laufräder steigungsabhängig emulieren.

In der Fahrradtypen-Emulationskurve können beliebige Kombinationen der oben beschriebenen Verlustcharakteristiken berücksichtigt sein.

Die Fahrradtypen-Emulationskurve kann zeitlich veränderlich sein, um beispielsweise Steigungen oder ein Trainingsprogram mit einem vorbestimmten Verlauf der Tretleistung, zum Beispiel ein Intervalltraining, zu simulieren. In diesem Fall ist einer oben beschriebenen zeitlich konstanten Fahrrad-Emulationskurve, durch die sich ein zumindest in Teilen anders aufgebautes Fahrrad und/oder ein anderer Radfahrer emulieren lässt, eine zeitlich veränderliche Fahrrad-Emulationskurve überlagert oder hinzugefügt. Der Radfahrer arbeitet auf diese Weise ein Trainingsprogramm ab und bekommt dabei das Fahrgefühl eines anderen Fahrrades vermittelt. Eine solche zeitliche Veränderung der Fahrradtypen-Emulationskurve kann auch sinnvoll sein, falls sich der Wirkungsgrad einer bestimmten Komponente aufgrund von Verschleiß über der Lebensdauer ändert. Der Hilfsantrieb kann beispielsweise hier die größer werdende Reibung innerhalb einer Kette über der Lebensdauer kompensieren.

Computervorrichtung und/oder Verfahren können ausgestaltet sein, unterschiedliche Fahrradtypen-Emulationskurven zu einer neuen Fahrradtypen-Emulationskurve zu kombinieren. Auf diese Weise kann sich ein Benutzer eine gewünschte Charakteristik aus verschiedenen Fahrradtypen-Emulationskurven baukastenartig zusammensetzen. Innerhalb einer Fahrradtypen-Emulationskurve können die Computervorrichtung und/oder das Verfahren die Auswahl unterschiedlicher zu emulierender Produkte durch den Benutzer erlauben, indem deren jeweils in einer Fahrradtypen-Emulationskurve repräsentierten Charakteristiken auswählbar gespeichert sind.

Gemäß einem Beispiel erlaubt es eine Fahrradtypen-Emulationskurve es beispielsweise, die Unterstützungsleistung so anzupassen, dass unabhängig von der Tretleistung eine vorbestimmte Fahrgeschwindigkeit, die beispielsweise als Grenzgeschwindigkeit vom Benutzer bestimmt wird, eingehalten wird. So kann der Radfahrer geländeunabhängig ein Trainingsprogram mit einer zeitlichen Abfolge unterschiedlicher Tretleistungen absolvieren, ohne dass dies seine Fahrgeschwindigkeit ändert.

Computervorrichtung und/oder Verfahren können zwischen einem Steigungsmodus, der eine bestimmte Neigung der Fahrstrecke simuliert, und einem Ergometer-Modus umschaltbar ausgestaltet sein.

Eine weitere vorteilhafte Ausgestaltung betrifft eine Computervorrichtung und/oder ein Verfahren, die ausgestaltet sind, den folgenden Schritt durchzuführen: Ermitteln der Unterstützungsleistung auch in Abhängigkeit der Abtriebsleistungsdaten, die repräsentativ für eine ausgangsseitig der Gangschaltung vorliegende Abtriebsleistung sind. Die Einbeziehung der Abtriebsleistungsdaten erlaubt die Implementierung eines geschlossenen Regelkreises und damit eine exaktere Simulation oder Emulation einer anderen Konfiguration durch das mit der Computervorrichtung ausgestattete Fahrrad.

Die Computervorrichtung und/oder das Verfahren sollten ausgestaltet sein, die Unterstützungsleistung so schnell in Abhängigkeit von der Fahrradtypen-Emulationskurve, der Tretleistung, der Trittfrequenz und gegebenenfalls weiteren Parametern einzustellen, also zu steuern oder zu regeln, dass der Effekt für den Nutzer scheinbar unmittelbar und ohne Verzögerung eintritt. Dies erfordert, dass die Steuerdaten in Echtzeit, also ohne für den Nutzer erkennbare Verzögerung ermittelt und insbesondere in die Unterstützungsleistung umgesetzt werden.

Die Erfindung betrifft ferner einen Hilfsantrieb für ein Fahrrad mit einer mechanischen Gangschaltung, wobei der Hilfsantrieb eine Steuereinheit zur Steuerung des Hilfsantriebs aufweist, die eine Computervorrichtung in einer der obigen Ausgestaltungen beinhaltet.

Der Hilfsantrieb kann einen Drehmomentsensor zur Ermittlung des vom Radfahrer erzeugten Drehmoments und einen Trittfrequenzsensor zur Ermittlung der Trittfrequenz des Radfahrers aufweisen. Der Drehmomentsensor und der Trittfrequenzsensor sind bevorzugt mit der Steuereinheit bzw. der Computervorrichtung datenübertragend verbunden. Die Datenübertragung kann drahtgebunden oder/oder drahtlos erfolgen. Der Drehmomentsensor und der Trittfrequenzsensor können Teil eines integrierten Sensors, beispielsweise eines Leistungssensors, sein, der zusätzlich zu den für das Drehmoment repräsentativen Drehmomentdaten und den für die Trittfrequenz repräsentativen Trittfrequenzdaten auch für die Tretleistung repräsentative Tretleistungsdaten ausgibt und an die Computervorrichtung sendet.

Gemäß einer weiteren vorteilhaften Ausgestaltung kann der Hilfsantrieb eine mechanische Gangschaltung und einen Abtriebsleistungssensor aufweisen, der im Kraftfluss hinter der Gangschaltung bzw. abtriebsseitig der Gangschaltung angeordnet ist. Der Abtriebsleistungssensor ist bevorzugt mit der Computervorrichtung datenübertragend verbunden, beispielsweise drahtlos und/oder drahtgebunden. Der Abtriebsleistungssensor ist aufgrund seiner Anordnung ausgebildet, Abtriebsleistungsdaten auszugeben und an die Computervorrichtung zu senden, die repräsentativ für eine Abtriebsleistung ausgangsseitig der Gangschaltung sind.

In einer weiteren vorteilhaften Ausgestaltung sind die Gangschaltung des Hilfsantriebs und ein Elektromotor des Hilfsantriebs zu einem Mittelmotor baulich vereint. Insbesondere bildet der gesamte Hilfsantrieb mit Gangschaltung eine bauliche Einheit, die einstückig in ein Fahrrad einbaubar ist.

Schließlich betrifft die Erfindung noch ein Fahrrad mit einer Tretlagerwelle, einer mechanischen Gangschaltung und entweder einem Hilfsantrieb mit einer Computervorrichtung wie oben beschrieben oder einem Hilfsantrieb in einer der obigen Ausgestaltungen.

Ein Elektromotor des Hilfsantriebes, die Gangschaltung und die Tretlagerwelle des Fahrrades sind in wenigstens einer Drehrichtung drehmomentübertragend mechanisch miteinander gekoppelt.

Die Erfindung betrifft noch ein Computerprogramm umfassend Befehle, die bei der Ausführung des Programms durch einen Computer diesen veranlassen, das Verfahren in einer der oben beschriebenen Ausgestaltungen auszuführen, sowie unabhängig davon ein computerlesbares Speichermedium, umfassend Befehle, die bei der Ausführung durch einen Computer, diesen veranlassen, das Verfahren in einer der oben beschriebenen Ausgestaltungen auszuführen.

Gemäß einem Aspekt kann die Computervorrichtung ausgestaltet sein, den folgenden Schritt durchzuführen: Ermitteln der Unterstützungsleistung auch in Abhängigkeit von Rollwiderstandsdaten, die repräsentativ für den Rollwiderstand sind.

Gemäß einem weiteren Aspekt kann die Computervorrichtung ausgestaltet sein, den folgenden Schritt durchzuführen: Ermitteln der Unterstützungsleistung auch in Abhängigkeit von gespeicherten Luftwiderstandsdaten, die repräsentativ für den Luftwiderstand des Fahrrades, des Rahmens, des Radfahrers und/oder der Laufräder sind.

Gemäß einem weiteren Aspekt kann die Computervorrichtung ausgestaltet sein, den folgenden Schritt durchzuführen: Ermitteln der Unterstützungsleistung auch in Abhängigkeit von Abtriebsleistungsdaten, die repräsentativ für eine in einer Richtung eines Kraftflusses hinter einem Getriebeausgang der Gangschaltung vorliegende Abtriebsleistung sind.

Gemäß einem weiteren Aspekt kann die Computervorrichtung ausgestaltet sein, den folgenden Schritt durchzuführen: Ermitteln der Unterstützungsleistung auch in Abhängigkeit von Gewichtsdaten, die repräsentativ sind für ein Gewicht des Fahrrades, des Rahmens, der Laufräder oder des Radfahrers.

Gemäß einem weiteren Aspekt der Computervorrichtung kann die Fahrradtypen-Emulationskurve repräsentativ sein für eine Differenz der Verlustenergie einer im Fahrrad verbauten Gangschaltung und einer von der verbauten Gangschaltung unterschiedlichen Gangschaltung.

Im Folgenden ist die Erfindung mit Bezug auf die beigefügten Zeichnungen anhand eines Ausführungsbeispiels exemplarisch näher erläutert. Dabei kann nach Maßgabe der obigen Ausführungen auf ein Merkmal des Ausführungsbeispiels verzichtet werden, wenn es bei einer bestimmten Anwendung auf den mit diesem Merkmal verknüpften Vorteil nicht ankommen sollte. Umgekehrt kann nach Maßgabe der obigen Ausführungen dem Ausführungsbeispiel auch ein oben beschriebenes Merkmal hinzugefügt werden, wenn es bei einer bestimmten Ausgestaltung auf den mit diesem Merkmal verknüpften Vorteil ankommen sollte.

In den Zeichnungen sind für Elemente, die einander hinsichtlich Aufbau und/oder Funktionen entsprechen, der Einfachheit halber dieselben Bezugszeichen verwendet.

Es zeigen:
- Fig. 1: eine schematische Darstellung eines Hilfsantriebs mit mechanischer Gangschaltung;
- Fig. 2: eine schematische Darstellung eines Fahrrades;
- Fig. 3: eine schematische Darstellung eines Leistungsflusses eines Fahrrades mit Hilfsantrieb;
- Fig. 4: eine qualitative Darstellung von Luftwiderstandscharakteristiken, die unterschiedliche Fahrräder, Radfahrer, Rahmen und/oder Laufräder repräsentieren;
- Fig. 5: eine qualitative Darstellung von Rollwiderstandscharakteristiken unterschiedlicher Reifen und von Trägheitscharakteristiken unterschiedlicher Fahrräder, Radfahrer, Rahmen und/oder Laufräder bei zwei unterschiedlichen Steigungen; und
- Fig. 6: eine qualitative Darstellung von Gangschaltungscharakteristiken zweier unterschiedlicher Gangschaltungen.

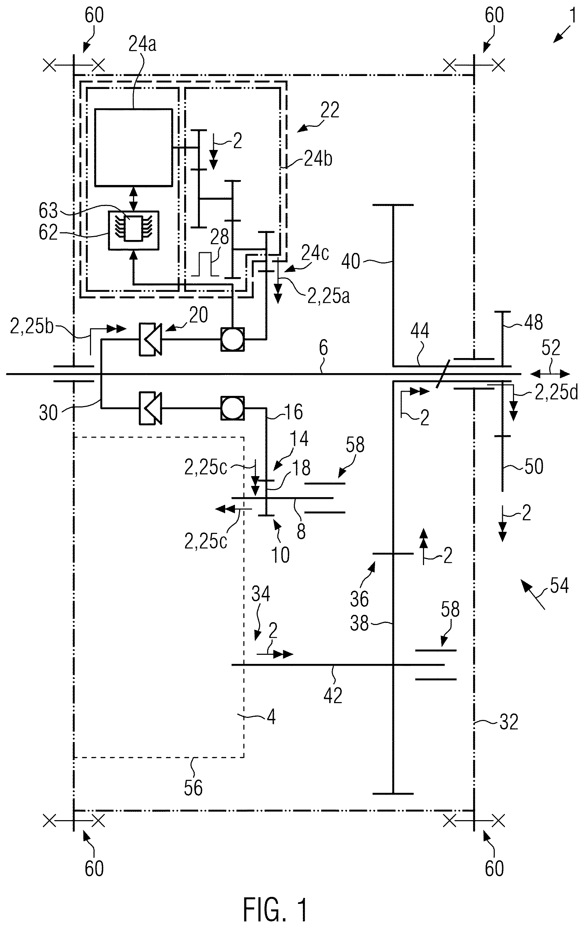

Zunächst wird der Aufbau einer Tretlagereinheit 1 für ein Fahrrad (nicht gezeigt) beispielhaft mit Bezug auf die Fig. 1 erläutert.

Die Tretlagereinheit 1 ist ausgestaltet, im Bereich des Tretlagers eines Rahmens eines Fahrrades (beides in Fig. 1 nicht gezeigt) angebracht zu werden. Ein Kraftfluss durch die Tretlagereinheit 1 ist durch den Doppelpfeil 2 angegeben.

Die Tretlagereinheit 1 weist eine mechanische Gangschaltung 4 auf, die in Fig. 1 lediglich angedeutet ist. Bei der Gangschaltung 1 handelt es sich lediglich beispielhalber um eine Tretlagerschaltung. Zusätzlich zu oder anstelle einer Tretlagerschaltung kann aber auch eine Nabenschaltung und/oder eine Kettenschaltung verwendet werden. Bevorzugt ist allerdings eine Tretlagerschaltung, da sie zu einer verbesserten Gewichtsverteilung am Fahrrad führt. Die Gangschaltung muss nicht diskrete Gänge bereitstellen, sondern kann auch eine kontinuierlich veränderbare Übersetzung bereitstellen.

Die Gangschaltung 4 weist eine radial und parallel zu einer Tretlagerwelle 6 versetzt angeordnete Eingangswelle 8 auf.

Vor einem Getriebeeingang 10 der Gangschaltung 4 befindet sich eine Eingangsstufe 14. Die Eingangsstufe 14 ist eine Übersetzung ins Schnelle mit einem Übersetzungsverhältnis zwischen etwa 3:1 und etwa 5:1. Sie weist zwei kämmende Eingangsräder 16, 18, insbesondere in Form stirnverzahnter Zahnräder auf. Das eine, abtriebsseitige Eingangsrad 18 sitzt auf einer Eingangswelle 8 der Gangschaltung 4; das andere, antriebsseitige Eingangsrad 16 sitzt mittelbar oder unmittelbar auf der Tretlagerwelle 6.

Zwischen der Eingangsstufe 14 und der Tretlagerwelle 6 ist optional ein Freilauf 20 angeordnet. Der Freilauf 20 verbindet die Tretlagerwelle 6 und die Eingangsstufe 14 drehstarr, wenn die Drehzahl der Tretlagerwelle 6 wenigstens so groß ist wie die Drehzahl des antriebsseitigen Eingangsrades 16. Ist die Drehzahl der Tretlagerwelle 6 kleiner als die Drehzahl des antriebsseitigen Eingangsrades 16 oder rückwärtsgerichtet, löst sich der Freilauf 20 selbsttätig und das antriebsseitige Eingangsrad 16 kann sich unabhängig von der Tretlagerwelle 6 drehen.

Die Eingangsstufe 14, insbesondere dessen antriebsseitiges Eingangsrad 16, wird nicht nur durch die Tretlagerwelle 6, sondern auch durch einen Hilfsantrieb 22 angetrieben. Hierzu befindet sich der Hilfsantrieb 22 bevorzugt unmittelbar im Eingriff mit der Eingangsstufe 14, insbesondere dem antriebsseitigen Eingangsrad 16. Der Hilfsantrieb 22 weist einen Hilfsmotor 24a und optional ein Untersetzungsgetriebe 24b auf. Das Untersetzungsgetriebe 24b des Hilfsantriebs 22 kann als eine separat vom Hilfsmotor 24a der Tretlagereinheit 1 anbringbare Baueinheit ausgestaltet oder zusammen mit dem Hilfsmotor 24a zu einer Baueinheit vereint bzw. vormontiert sein.

An der Eingangsstufe 14, insbesondere dem antriebsseitigen Eingangsrad 16, werden der an der Tretlagerwelle 6 erzeugte Kraftfluss 2, der aus der Pedalbewegung eines Radfahrers stammt, und der Kraftfluss 2 vom Hilfsantrieb 22 zusammengeführt und zur Gangschaltung 4 geleitet. Der Freilauf 20 verhindert einen Kraftfluss vom Hilfsantrieb 22 zur Tretlagerwelle 6; er verhindert, dass der Hilfsantrieb 22 die Pedalarme und damit die Beine des Fahrradfahrers antreiben kann.

Zwischen dem antriebsseitigen Eingangsrad 16 und der Tretlagerwelle 6, insbesondere zwischen dem Freilauf 20 und dem antriebsseitigen Eingangsrad 16, kann ein Tretleistungs-, Tretmoment-und/oder Trittfrequenzsensor 26 angeordnet sein, der zur Steuerung des Hilfsantriebs 22 verwendbare Daten 28 ausgibt, die für ein am antriebsseitigen Eingangsrad 16 oder der Tretlagerwelle 6 anliegendes Tretmoment und/oder eine an der Tretlagerwelle 6 anliegende Tretleistung und/oder Trittfrequenz repräsentativ sind. Der Sensor 26 kann in Bezug auf den Kraftfluss vor oder hinter dem Freilauf 20 angeordnet sein.

Das antriebsseitige Eingangsrad 16 kann mittelbar auf der Tretlagerwelle 6 sitzen, indem es beispielsweise auf einer Hohlwelle 30, hier als eingangsseitige Hohlwelle bezeichnet, angeordnet ist, die koaxial zur Tretlagerwelle 6 angeordnet ist. Die Hohlwelle 30 kann über den Freilauf 20 mit der Tretlagerwelle 6 verbunden sein. Der Freilauf 20 und der Drehzahl- und/oder Drehmomentsensor 28, falls vorhanden, sind bevorzugt an der Hohlwelle angeordnet. Die Hohlwelle 30 kann auf der Tretlagerwelle 6 und/oder in einem Gehäuse 32 der Tretlagereinheit 1 drehbar gelagert sein.

Alternativ kann das antriebsseitige Eingangsrad 16 auch unmittelbar auf der Tretlagerwelle 6 drehstarr befestigt sein. In diesem Fall kann sich der Freilauf 20 im oder am antriebsseitigen Eingangsrad 16 befinden sein, so dass eine Hohlwelle unnötig ist.

An einem Getriebeausgang 34 der Gangschaltung 4 befindet sich eine Ausgangsstufe 36. Die Ausgangsstufe 36 weist ein antriebsseitiges Ausgangsrad 38 und ein abtriebsseitiges Ausgangsrad 40 auf, die als ein Paar miteinander kämmender Stirnräder ausgestaltet sein können. Die Ausgangsstufe 36 ist als eine Untersetzung ausgestaltet, wobei das Untersetzungsverhältnis zwischen 1:2 und 1:4 beträgt.

An einer Stelle 24c, hier lediglich beispielhaft die Eingangsstufe 14, ist die vom Hilfsantrieb 22 erzeugte Unterstützungsleistung 25a der vom Radfahrer erzeugten Tretleistung 25b hinzugefügt. Die Stelle 24c kann auch in Richtung des Kraftflusses 2 hinter der Gangschaltung 4 angeordnet sein, beispielsweise an der Ausgangsstufe 36.

Bei der dargestellten Ausführung geht die Summe 25c aus Tretleistung 25b und Unterstützungsleistung 25a geht in die Gangschaltung 4 und jenseits des Getriebeausgangs 34 als Abtriebsleistung 25d an beispielsweise das Hinterrad (nicht gezeigt). Die tatsächlich verfügbare Abtriebsleistung 25d ist aufgrund von Verlusten kleiner als die Summe 25c.

Das antriebsseitige Ausgangsrad 38 sitzt bevorzugt auf einer Ausgangswelle 42 der Gangschaltung 4. Die Ausgangswelle 42 kann radial versetzt oder koaxial zur Eingangswelle 8 angeordnet sein. Eingangs- und Ausgangswelle der Gangschaltung können auf gegenüberliegenden Seiten der Gangschaltung 4 von außen zugänglich ausgestaltet sein. Alternativ kann auch die Eingangswelle 8 eine Hohlwelle sein, in der die Ausgangswelle 32 läuft oder die Ausgangswelle 32 als eine Hohlwelle ausgestaltet ist, in der die Eingangswelle läuft. Über die Ausgangswelle 42 wird der Kraftfluss 2 aus der Gangschaltung 4 geführt.

Das abtriebsseitige Ausgangsrad 40 sitzt auf einer ausgangsseitigen Hohlwelle 44 der Tretlagereinheit 1, die koaxial zur Tretlagerwelle 6 angeordnet ist. Die ausgangsseitige Hohlwelle 44 kann auf der Tretlagerwelle 6 und/oder im Gehäuse 32 gelagert sein.

An der ausgangsseitigen Hohlwelle 44 kann der Kraftfluss 2 von außerhalb der Tretlagereinheit 1 abgegriffen und zum Antrieb des Fahrrades genutzt werden. Hierzu kann die ausgangsseitige Hohlwelle 44 ausgestaltet sein, ein Antriebsrad 48, wie beispielsweise ein Kettenblatt oder ein Zahnriemenrad, zu tragen. Über das Antriebsrad 48 und ein Zugmittel 50, wie eine Kette oder ein Zahnriemen, kann dann ein Hinterrad (in Fig. 1 nicht dargestellt) des Fahrrades angetrieben werden.

Die eingangsseitige Hohlwelle 30, sofern vorhanden, und die ausgangsseitige Hohlwelle 44 liegen in axialer Richtung 52 der Tretlagerwelle nebeneinander, bevorzugt ohne sich zu überlappen.

Das Gehäuse 32 der Tretlagereinheit 1 ist bevorzugt als eine strukturelle Komponente eines Rahmens des Fahrrads ausgestaltet. Als strukturelle Komponente nimmt das Gehäuse 32 die während des Betriebs im Rahmen auftretenden Kräfte auf. Bevorzugt versteift das Gehäuse 32 die Verbindung von Sattelrohr und Unterrohr sowie gegebenenfalls der Kettenstreben.

Das Gehäuse 32 umgibt wenigstens die Tretlagerwelle 6, das antriebsseitige Eingangsrad 16 und das abtriebsseitige Ausgangsrad 40. Sowohl die Tretlagerwelle 6 als auch die ausgangsseitige Hohlwelle 44 treten aus dem Gehäuse 32 aus, so dass sie von außerhalb des Gehäuses 32 zugänglich sind. Die ausgangsseitige Hohlwelle 44 tritt nur an einer Seite 54 aus dem Gehäuse 32, die Tretlagerwelle 6 zu beiden Seiten des Gehäuses 32. Die Tretlagerwelle 6 ragt dabei weiter aus dem Gehäuse als die ausgangsseitige Hohlwelle 44.

Die Gangschaltung 4 kann ein eigenes Gehäuse 56 aufweisen. In diesem Fall sind das Gehäuse 2 der Tretlagereinheit 1 und das Gehäuse 56 der Gangschaltung 4 ausgestaltet, aneinander befestigt zu werden. Bevorzugt ist jedoch der Gangschaltung 4 in das Gehäuse 32 integriert bzw. in diesem ohne eigenes Gehäuse angeordnet. In diesem Fall kann das Gehäuse 56 entfallen. Das Gehäuse 32 stellt dann Lagerstellen 58 bereit, an denen die Getriebewellen der Gangschaltung 4 gelagert sind.

Der Hilfsantrieb 22 kann außen oder innen am Gehäuse 32 befestigt sein. Das Gehäuse 32 kann hierfür entsprechende Befestigungsmittel, beispielsweise Flansche aufweisen. Bevorzugt ist jedoch auch hier der Hilfsantrieb 22, wenigstens aber das Untersetzungsgetriebe 24b, im Gehäuse 32 integriert bzw. innerhalb des Gehäuses 32 angeordnet.

Zur Anbringung im Bereich des Tretlagers des Fahrrades ist das Gehäuse 32 mit Befestigungsstellen 60 versehen.

Im Unterschied zur Ausgestaltung der Fig. 1 kann in Varianten der Tretlagereinheit 1 die Gangschaltung 4 in Richtung parallel zur Tretlagerwelle 6 wenigstens teilweise zwischen der Eingangsstufe 14 und der Ausgangsstufe 36 angeordnet sein. Die Eingangswelle 8 und die Ausgangswelle 42 können an sich gegenüberliegenden Seiten zugänglich sein. Der Hilfsantrieb 22 kann sich bei den Varianten jeweils an unterschiedlicher Stelle befinden.

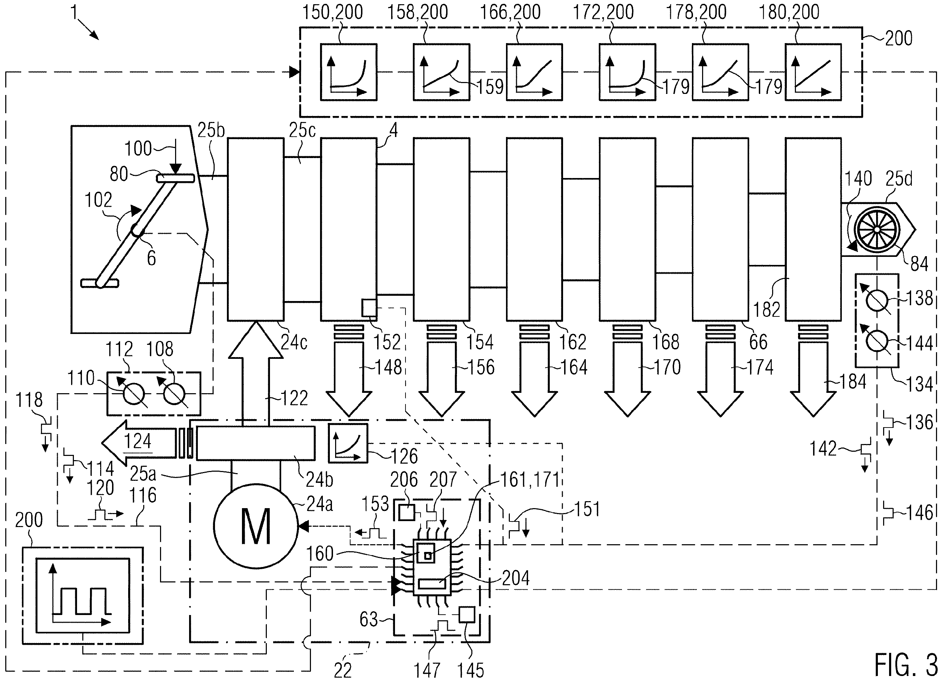

Eine Steuereinheit 62 mit einer vorzugsweise programmierbaren Computervorrichtung 63 steuert den Hilfsantrieb 22 bzw. den Hilfsmotor 24a. Die Steuereinheit 62 kann Teil des Hilfsantriebs 22 sein. Die Computervorrichtung 63 umfasst insbesondere einen oder mehrere Mikroprozessoren, wie einen ASIC. Die Computervorrichtung 63 ist insbesondere ausgestaltet, die Unterstützungsleistung 25a abhängig von bestimmten Parametern zu ermitteln, wie nachstehend mit Bezug auf die Fig. 3 im Einzelnen erläutert ist. Weitere Elemente der Steuereinheit 62 können ein Display und Funktionstasten sein, die hier der Einfachheit halber nicht dargestellt sind.

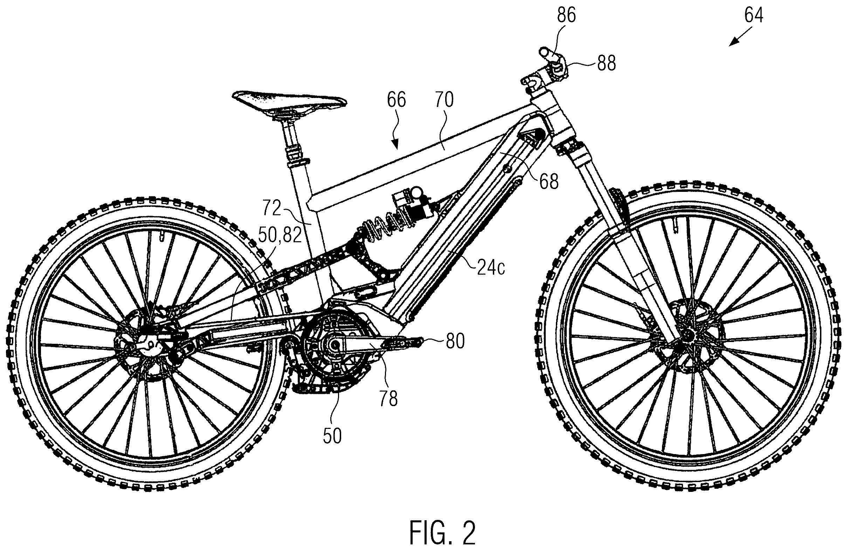

Fig. 2 zeigt die Tretlagereinheit 1 oder eine andere Tretlagereinheit, beispielsweise eine Tretlagereinheit ohne Gangschaltung, an einem hier betriebsbereiten Fahrrad 64. Das Fahrrad 64 weist beispielsweise einen diamantförmigen Rahmen 66 mit einem Unterrohr 68, einem Oberrohr 70 und einem Sitzrohr 72 auf. Am Unterrohr 68 oder einer anderen Stelle des Rahmens 66 kann eine Batterie 24d des Hilfsantriebs angeordnet sein. Die Tretlagereinheit 1 bildet das Tretlager 74 und ist in dem Bereich 76, in dem das Unterrohr 68 und das Sitzrohr 72 miteinander verbunden sind, angeordnet. Das Gehäuse 32 versteift den Rahmen 66 im Bereich 76 und ist damit ein tragender Teil des Rahmens 66.

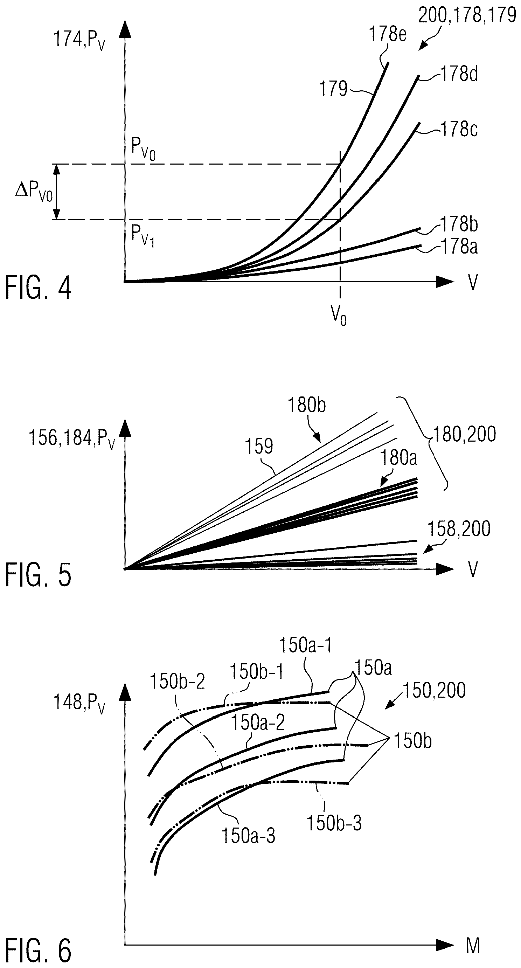

An der Tretlagerwelle 6 sind in Fig. 6 Kurbeln 78 angebracht, die Pedale 80 tragen. Auf der einen Seite 54 der Tretlagereinheit 1 ist räumlich zwischen der dortigen Kurbel 78 und dem Gehäuse 32 auf der ausgangsseitigen Hohlwelle 44 eine Zahnriemenscheibe als Antriebsrad 48 angebracht. Das Antriebsrad 48 treibt über einen Zahnriemen 82 das Hinterrad 84 des Fahrrades 64 an. Selbstverständlich kann anstelle des dargestellten Zahnriementriebs auch ein Kettentrieb verwendet werden.

Über ein Schaltelement 86 am Lenker 88 des Fahrrades 64 wird die Gangschaltung 4 geschaltet.

In Fig. 3 ist gezeigt, dass durch eine auf die Pedale 80 ausgeübte Tretkraft 100 ein Tretmoment 102 um eine Tretlagerwelle 6 erzeugt wird. Je nach Trittfrequenz ergibt sich daraus eine Tretleistung 25b, deren Größe in Fig. 3 durch die Breite des Balkens angedeutet ist.

Ein Tretmomentsensor 108, der Teil des Sensors 26 (Fig. 1) sein kann, greift das Tretmoment 102 ab, das auf die Tretlagerwelle 6 einwirkt. Ein Trittfrequenzsensor 110, der Teil des Sensors 26 sein kann, greift die Drehzahl der Tretlagerwelle 6 ab. Der Tretmomentsensor 108 und der Trittfrequenzsensor 110 können in einem Tretleistungssensor 112 vereint sein, der ebenfalls Teil des Sensors 26 sein kann.

Der Tretmomentsensor 108 erzeugt für das Tretmoment 102 repräsentative Tretmomentdaten 114, die über eine drahtgebundene und/oder drahtlose Datenübertragungsstrecke 116 an die Steuereinheit 62 bzw. die Computervorrichtung 63 des Hilfsantriebs 22 geleitet werden. Der Trittfrequenzsensor 110 ist ausgestaltet, über die Datenübertragungsstrecke 116 oder eine weitere drahtgebundene und/oder drahtlose Datenübertragungsstrecke Trittfrequenzdaten 118 an die Computervorrichtung 63 zu übermitteln. Der Tretleistungssensor 112 ist ausgestaltet, über die Datenübertragungsstrecke 116 oder eine weitere drahtgebundene und/oder drahtlose Datenübertragungsstrecke Tretleistungsdaten 120 an die Computervorrichtung 63 zu übermitteln.

Die Unterstützungsleistung 25a des Hilfsantriebs 22 wird, wie durch den Pfeil 122 angedeutet ist, an der Stelle 24c (s. auch Fig. 1) der Tretleistung 25b hinzugefügt, woraus die Gesamtleistung 25c als Summe von Tretleistung 25b und Unterstützungsleistung 25a resultiert. Das Untersetzungsgetriebe 24b, falls vorhanden, führt zu einer Verlustleistung 124, die die der Tretleistung 25b tatsächlich zuführbare Unterstützungsleistung 25a etwas verringert. Die Verlustleistung 124 des Untersetzungsgetriebes 24b des Hilfsantriebs 22 kann als konstant, bevorzugt aber als drehzahl- und/oder leistungsabhängig angesehen sein.

Die Abhängigkeit der Verlustleistung 124 von einer Drehzahl des Hilfsantriebs 22 und der Unterstützungsleistung 25a ist in einer Antriebsverlustcharakteristik 126 repräsentiert, die analytisch oder empirisch ermittelt sein kann.

Nach der Zuführung der Unterstützungsleistung 25a steht insbesondere an der Tretlagerwelle 6 eine erhöhte Gesamtleistung 25c zur Verfügung, wenn der Hilfsmotor 24a im Motorbetrieb arbeitet. Arbeitet der Hilfsmotor 24a dagegen im Generatorbetrieb, so ist die Gesamtleistung 25c kleiner als die Tretleistung 25b, weil durch eine negative Unterstützungsleistung 25a dem Hilfsmotor 24a ein Teil der Tretleistung zugeführt wird.

Am Hinterrad 84 des Fahrrads 64 kommt eine Abtriebsleistung 25d an. Die Abtriebsleistung 25d kann nicht nur durch die Computervorrichtung 63 berechnet, sondern optional auch durch einen Abtriebsleistungssensor 134 erfasst werden, der Abtriebsleistungsdaten 136 drahtlos und/oder drahtgebunden an die Computervorrichtung 63 übermittelt. Ein Abtriebsmomentensensor 138 kann ein am Hinterrad wirkendes Abtriebsmoment 140 erfassen und für das Abtriebsmoment 140 repräsentative Abtriebsmomentdaten 142 drahtlos und/oder drahtgebunden an die Steuereinheit 62 bzw. die Computervorrichtung 63 übermitteln. Eine Drehzahl des Hinterrades 84 kann durch einen Abtriebsfrequenzsensor 144 ermittelt werden, der Abtriebsfrequenzdaten 146, die für die Abtriebsfrequenz bzw. Drehzahl des Hinterrades 84 repräsentativ sind, drahtlos und/oder drahtgebunden an die Steuereinheit 62 bzw. die Computervorrichtung 63 übermittelt. Aus den Abtriebsfrequenzdaten 146 lässt sich eine Fahrgeschwindigkeit des Fahrrads ableiten, wenn der Radumfang bekannt ist. Alternativ oder zusätzlich kann die Steuereinheit bzw. die Computervorrichtung 63 einen Positionssensor 145 aufweisen, beispielsweise einen GPS-, GLONASS- und/oder GALILEO-Sensor. Mithilfe des Positionssensors 145 lässt sich die Fahrgeschwindigkeit ermitteln. Bei bekanntem Radumfang lässt sich die Fahrgeschwindigkeit auch aus dem bekanntem gerade von der Gangschaltung 4 bereitgestelltem Übersetzungsverhältnis und den Trittfrequenzdaten 118 berechnen. Die Fahrgeschwindigkeit ist durch Fahrgeschwindigkeitsdaten 147 repräsentiert.

Die Gesamtleistung 25c verringert sich aufgrund verschiedener Verluste, bis sie das Hinterrad 84 erreicht und das Fahrrad 64 antreibt. Diese Verluste sind im Folgenden kurz erläutert. Eine Verlustquelle ist beispielsweise die Gangschaltung 4, die eine Verlustenergie 148 "erzeugt". Dieser Verlust entsteht auf der einen Seite durch Reibung, auf der anderen Seite jedoch auch durch erhöhten Kraftaufwand aufgrund der Massenträgheit der einzelnen, rotierenden Bauteile. Die Verlustenergie der Gangschaltung 4 ist abhängig beispielsweise von der am Eingang der Gangschaltung 4 anliegenden Gesamtleistung 25c, dem eingangsseitig anliegenden Drehmoment, der eingangsseitig anliegenden Drehzahl und/oder einem gerade von der Gangschaltung 4 bereitgestellten Übersetzungsverhältnis.

Die eingangsseitig an der Gangschaltung 4 vorliegende Drehzahl kann dabei der Drehzahl der Tretlagerwelle 6 entsprechen oder in einem festen, bekannten Verhältnis zur Drehzahl der Tretlagerwelle 6 stehen.

Die Abhängigkeit der Verlustenergie 148 der Gangschaltung 4 von wenigstens einem Parameter aus der Gruppe Drehzahl, Drehmoment und Übersetzungsverhältnis kann in einer Gangschaltungscharakteristik 150 repräsentiert sein, die einer bestimmten Kombination von Drehzahl, Drehmoment und Übersetzungsverhältnis eindeutig eine bestimmte Verlustenergie 148 zuordnet. Das momentan in der Gangschaltung 4 vorliegende Übersetzungsverhältnis kann durch Schaltungsdaten 151 repräsentiert sein. Die Schaltungsdaten 151 können von einem Gangschaltungssensor 152 erzeugt sein, der in die Gangschaltung 4 integriert ist. Die Abhängigkeit der Verlustenergie 148 der Gangschaltung 4 kann optional zusätzlich auch noch durch weitere Parameter repräsentiert sein. Beispielhaft seien an dieser Stelle Temperatur und Betriebszeit oder elektronisch in der Computervorrichtung 63 generierte mathematische Zeitableitungen oder Transformationen der Parameter genannt.

Die Computervorrichtung 63 kann ausgebildet sein, in Abhängigkeit von der Gangschaltungscharakteristik 150 Steuerdaten 153 zu erzeugen, die den Hilfsantrieb 22, insbesondere den Hilfsmotor 24a so steuern, dass die Verlustenergie 148 der Gangschaltung 4 kompensiert wird. Eine Kompensation bedeutet in diesem Zusammenhang, dass der Hilfsmotor 24a genau so viel Energie zusätzlich in die Gangschaltung 4 einspeist , dass Reibung und/oder Trägheit kompensiert werden und am Getriebeausgang wieder genau die vom Radfahrer erbrachte Tretleistung anliegt.

In der Gangschaltungscharakteristik 150 können auch weitere Verluste, die beispielsweise durch den Antrieb, beispielsweise das über das Antriebsrad 48 laufende Zugmittel 50 (Fig. 1), des Fahrrads 62 erzeugt werden, berücksichtigt sein. So können die Antriebsverluste eines Kettentriebs oder eines Riementriebs in der Gangschaltungscharakteristik 150 berücksichtigt sein, oder aber Teil einer weiteren, in Fig. 2 nicht dargestellten Antriebscharakteristik sein. Die Computervorrichtung 63 kann ausgebildet sein, in Abhängigkeit von der Antriebscharakteristik Steuerdaten 153 zu erzeugen, die den Hilfsantrieb 22, insbesondere den Hilfsmotor 24a so steuern, dass die Antriebsverluste kompensiert werden. Dies ist insofern vorteilhaft, als auf diese Weise Fahrradschaltungen an elektrifizierten Fahrrädern eingebaut werden können , die eine sehr lange Lebensdauer besitzen. Auf einen hohen Wirkungsgrad muss zumindest vordergründig nicht mehr geachtet werden.

Eine weitere Ursache von Verlusten sind die Reifen 154, bei denen der Rollwiderstand 156 für eine Verlustenergie verantwortlich ist. Die durch die Reifen 154 bzw. den Rollwiderstand 156 erzeugte Verlustenergie ist abhängig vom Reifentyp. Sie kann alternativ oder zusätzlich von der Fahrgeschwindigkeit und/oder einem Luftdruck und/oder einem Gewicht von Fahrer und/oder Fahrrad 64 abhängig sein. Eine Rollwiderstandscharakteristik 158 repräsentiert die Abhängigkeit des Rollwiderstands 156 eines Reifentyps einem oder mehreren dieser Parameter. Die Rollwiderstandscharakteristik 158 setzt sich aus Rollwiderstandsdaten 159 zusammen, die die Abhängigkeit des Rollwiderstands 156 von den verschiedenen Parametern wiederspiegeln. In einem Speicher 160 der Steuereinheit 62 bzw. der Computervorrichtung 63 können die Rollwiderstandscharakteristiken 158 unterschiedlicher Reifen gespeichert sein. Dies ist vorteilhaft, da auf diese Weise Reifen an elektrifizierten Fahrrädern eingebaut werden können , die robust sind und eine sehr lange Lebensdauer besitzen.

Für das Gewicht des Fahrrades 64, des Radfahrers, des Rahmens 66 und/oder des Laufradsatzes repräsentative Gewichtsdaten 161 können im Speicher 160 gespeichert sein. Die Computervorrichtung 63 ist insbesondere ausgestaltet, eine Änderung der gespeicherten Gewichtsdaten durch den Benutzer zu ermöglichen.

Mit dem Bezugszeichen 162 sind Verluste des Antriebsmittels 164, mit dem die Antriebsleistung zum Hinterrad 84 geleitet wird, berücksichtigt. Die vom Antriebsmittel 164 erzeugte Verlustenergie 162 kann von der Drehzahl des Antriebsmittels 164, dem gewählten Übersetzungsverhältnis, der Art des Antriebsmittels (Kette oder Riemen) und/oder der übertragenen Leistung abhängen. Die Drehzahl des Antriebsmittels 164 lässt sich aus der Drehzahl der Tretlagerwelle 6 und dem Übersetzungsverhältnis der Gangschaltung 4 ermitteln. Die Abhängigkeit der Verlustleistung 162 von einem oder mehreren dieser Parameter ist durch eine Antriebsmittelcharakteristik 166 repräsentiert. Die Computervorrichtung 63 kann ausgestaltet sein, mit Hilfe der Steuerdaten 153 die vom Hilfsantrieb 22 abgegebene Unterstützungsleistung 25a so zu steuern, dass die Verlustenergie 162 aufgrund der Antriebsmittel 162 exakt kompensiert wird.

In einer einfacheren Ausgestaltung kann die Verlustenergie 164 des Antriebsmittels 162 auch in der Verlustenergie 148 der Gangschaltung 4 berücksichtigt sein.

Eine weitere Quelle für Verluste ist der Luftwiderstand 170 des Radfahrers 168. Der Luftwiderstand 170 hängt unter anderem von den Körpermaßen des Radfahrers 168 ab, wie dessen Körpergröße und Schulterbreite sowie unter Berücksichtigung gängiger Körpermodelle von dessen Körpergewicht ab. Die Körpermaße sind durch Körperdaten 171 repräsentiert. Die Gewichtsdaten 161 können Teil der Körperdaten 171 sein.

Weiterhin wird der Luftwiderstand 168 durch die Sitzposition des Radfahrers bestimmt, die wiederum vom Fahrradtyp vorgegeben ist. In einer Luftwiderstandscharakteristik 172 des Radfahrers ist die Abhängigkeit der Verlustenergie 170 von wenigstens einem dieser Parameter repräsentiert. Der Luftwiderstand 174 des Rahmens 66 (Fig. 2) und/oder der Laufräder des Fahrrades 64 führt ebenfalls zu einer Verlustleistung. Der Luftwiderstand der Laufräder und des Rahmens 66 kann auch jeweils gesondert berücksichtigt und in einer eigenen jeweils Charakteristik repräsentiert sein.

Der Luftwiderstand 174 des Fahrradrahmens und/oder der Laufräder ist in erster Linie abhängig von der Fahrgeschwindigkeit und kann in einer Rahmen-/Laufrad-Luftwiderstandcharakteristik 178 repräsentiert sein. Die Rahmen-/Laufrad-Luftwiderstandcharakteristik 178 kann die Charakteristiken unterschiedliche Fahrradrahmen und/oder Laufräder enthalten. Die Computervorrichtung 63 kann ausgestaltet sein, mit Hilfe der Steuerdaten 153 die vom Hilfsantrieb 22 abgegebene Unterstützungsleistung 25a so zu steuern, dass abhängig von der Rahmen-/Laufrad-Luftwiderstandcharakteristik 178 aufgrund der Luftwiderstand 174 des Rahmens und/oder der Laufräder exakt kompensiert wird.

Natürlich können auch die Luftwiderstandscharakteristiken von Rahmen, Laufrädern und Radfahrern in einer gemeinsamen Luftwiderstandscharakteristik zusammengefasst sein.

Luftwiderstandsdaten 179 repräsentieren die Abhängigkeit des Luftwiderstands 170 und/oder des Luftwiderstands 174 von den einzelnen, oben beispielhaft genannten Parametern. Sie sind insbesondere Bestandteil der jeweiligen Luftwiderstandscharakteristik

Schließlich kann eine Trägheitscharakteristik 180 vorhanden sein, die repräsentativ ist für das aufgrund der trägen Radfahrer- und/oder Fahrradmasse 182 vorhandene dynamische Verhalten, insbesondere beim Beschleunigen. Die Fahrradmasse 182 kann das Gewicht des gesamten Fahrrades oder getrennt veränderliche Teilgewichte wie das Gewicht eines Rahmens 66, einer Gangschaltung 4 oder von Laufrädern enthalten. Die Radfahrermasse kann aus den Körpermassparametern erhalten werden. Die zur Beschleunigung unterschiedlicher Fahrer- und/oder Fahrradmassen benötigte Energie kann als Verlustenergie 184 angesehen werden. Die Fahrradtypen-Emulationskurve kann translatorische Massenträgheiten und rotative Massenträgheiten (rotierende Getriebeteile, rotierende Laufräder) beinhalten bzw. berücksichtigen.

Die Charakteristiken 150, 158, 166, 172, 178, 180 oder eine beliebige Teilmenge davon kann im Speicher 160 der Computervorrichtung 63 als analytische oder rekursive Funktion und/oder Lookup-Tabelle abgelegt sein. Einige Charakteristiken können dabei als analytische Funktion, andere als rekursive Funktion und wiederum andere als Lookup-Tabellen abgelegt sein. Es können auch zwei oder mehr Charakteristiken zu einer gemeinsamen Charakteristik vereint sein, wie dies oben bereits anhand des Luftwiderstands einerseits des Fahrers und andererseits des Rahmens und/oder der Laufräder erläutert ist.

Die Computervorrichtung 63 kann ausgestaltet sein, auf eine Benutzereingabe hin nur einzelne ausgewählte Charakteristiken zur Steuerung des Hilfsantriebes 22 zu nutzen. So kann der Benutzer beispielsweise auf die Kompensation einer beliebigen Teilmenge der Charakteristiken 148, 156, 164, 170, 178, 184 verzichten.

Jede der Charakteristiken 148, 156, 164, 170, 178, 184 kann selbst mehrere Charakteristiken enthalten, die zwar die gleiche Art von Verlustenergie repräsentieren, aber unterschiedliche Konfigurationen. So kann beispielsweise die Luftwiderstandscharakteristik 172 verschiedene Charakteristiken enthalten, die unterschiedliche Sitzpositionen des Radfahrers repräsentieren. Die Rollwiderstandscharakteristik 158 kann verschiedene Charakteristiken enthalten, die unterschiedliche Reifentypen repräsentieren. Die Gangschaltungscharakteristik 150 kann verschiedene Charakteristiken enthalten, die unterschiedliche Gangschaltungen 4 repräsentieren. Die Rahmen-/Laufrad-Luftwiderstandscharakteristik 178 kann verschiedene Charakteristiken enthalten, die den Luftwiderstand unterschiedlicher Rahmen 66 und/oder unterschiedlicher Laufräder repräsentieren. Die Computervorrichtung 63 ist bevorzugt ausgestaltet, abhängig von einer Benutzereingabe jeweils eine in den Charakteristiken 148, 156, 164, 170, 178, 184 auszuwählen.

Jede einzelne Charakteristik 150, 158, 166, 172, 178, 180 oder eine beliebige Kombination dieser Charakteristiken stellt eine Fahrradtypen-Emulationskurve 200 dar. Die Fahrradtypen-Emulationskurve 200 dient zur Steuerung der Unterstützungsleistung 25a so, dass einzelne oder mehrere Verlustleistungen 148, 156, 164, 170, 174, 184 kompensiert werden. Damit emuliert das Fahrrad einen anderen Fahrradtyp. Wird nämlich beispielsweise die Verlustenergie 148 der Gangschaltung 4 aufgrund der als Fahrradtypen-Emulationskurve 200 dienenden Charakteristik 150 kompensiert, so emuliert das Fahrrad ein Fahrrad mit Single-Speedschaltung, bei dem mangels Gangschaltung 4 keine Verluste in der Gangschaltung auftreten. In diesem Fall stellen die Charakteristiken 150, 158, 166, 172, 178, 180 absolute Verlustleistungen 148, 156, 164, 170, 174, 184 dar. Eine Kompensation dieser absolute Verlustleistungen 148, 156, 164, 170, 174, 184 durch die Unterstützungsleistung 25a emuliert ein Fahrrad, bei dem die Ursache der Verlustleistung nicht vorhanden ist.

Die Charakteristiken 150, 158, 166, 172, 178, 180 können jedoch nicht nur absolute Verlustleistungen repräsentieren, sondern auch relative Verlustleistungen 148, 156, 164, 170, 174 184. In diesem Fall stellen jede der Charakteristiken 150, 158, 166, 172, 178, 180 die Differenz der jeweiligen absoluten Verlustleistung 148, 156, 164, 170, 174 184 für eine bestimmte Ausgestaltung der die jeweilige Verlustleistung verursachenden Komponente und einer absoluten Verlustleistung 148, 156, 164, 170, 174 184 für eine andere Ausgestaltung der die jeweilige Verlustleistung verursachenden Komponente dar.

So kann die Gangschaltungscharakteristik 150 die unterschiedlichen Verlustleistungen zweier unterschiedlicher Getriebe repräsentieren. Die Gangschaltungscharakteristik 150 stellt in diesem Fall einfach die Differenz der absoluten Verlustcharakteristik der einen Gangschaltung und der absoluten Verlustcharakteristik einer anderen Gangschaltung dar, also eine relative Verlustcharakteristik. Kompensiert die Unterstützungsleistung 25a die relative Verlustleistung, so emuliert das Fahrrad eine anderes Fahrrad, bei dem wenigstens eine tatsächlich vorhandene, die kompensierte Verlustleistung erzeugende Komponente durch eine andere, emulierte Komponente mit anderer Verlustleistung ersetzt ist.

Mit Hilfe der Gangschaltungscharakteristik 150 lässt sich beispielsweise auf diese Weise eine andere Gangschaltung emulieren. So kann die Gangschaltungscharakteristik 150 den Unterschied der Verlustleistung 148 der tatsächlich verbauten Gangschaltung 4 des Fahrrades 64 bei verschiedenen Trittfrequenzen und Tretmomenten zu einer anderen, zu emulierenden Gangschaltung 4 repräsentieren. Auf diese Weise emuliert die Computervorrichtung 63 die Charakteristik der anderen Gangschaltung 4. Repräsentiert beispielsweise die Gangschaltungscharakteristik 150 die Unterschiede in den Verlustenergien eines verbauten Tretlagergetriebes und einer bestimmten Kettenschaltung, so kann die Computervorrichtung 63 ein Fahrrad mit dieser bestimmten Kettenschaltung emulieren. Von der Tretleistung her fühlt sich das Fahrrad 64 für den Radfahrer so an wie ein Fahrrad mit der Kettenschaltung. Sofern entsprechende Gangschaltungscharakteristiken 150 empirisch oder analytisch ermittelt werden können, können beliebige Schaltungen emuliert werden. Entsprechendes gilt natürlich für die übrigen Charakteristiken 158, 166, 172, 178, 180.

So kann die Rollwiderstandscharakteristik 158 den unterschiedlichen Verlauf der Verlustenergien 156 der beim Fahrrad 64 tatsächlich eingesetzten Reifen und des Rollwiderstands eines anderen, zu emulierenden Reifentyps berücksichtigen. Wird die Unterstützungsleistung 25a in Abhängigkeit von einer solchen Rollwiderstandscharakteristik 158 gesteuert, so emuliert das Fahrrad 64 andere Reifen als die montierten. Von der Tretleistung her fühlt es sich für den Radfahrer so an, als ob die emulierten Reifen montiert seien. So lässt sich beispielsweise ein Fahrverhalten simulieren, bei dem anstelle langlebiger, komfortabler Turnreifen mit hohem Rollwiderstand weniger verlustbehaftete Rennradreifen emuliert werden, ohne dass hierunter der Komfort leidet. Vorzugsweise lassen sich die Charakteristiken unterschiedlicher Reifen auswählen, so dass nach einer Eingabe des Benutzers anstelle eines bestimmten Rennradreifens ein bestimmter Mountainbikereifen oder ein anderer Rennradreifen emuliert werden kann.

In der Antriebsmittelcharakteristik 166 kann der unterschiedliche Verlauf der Verlustenergien 164 unterschiedlicher Antriebsmittel repräsentiert sein. So kann beispielsweise ein mit einem Riementrieb ausgestattetes Fahrrad einen Kettentrieb simulieren.

In der Luftwiderstandscharakteristik 172 des Radfahrers können die Luftwiderstandscharakteristiken anderer Radfahrer mit anderen Körpermaßen oder anderen Sitzpositionen berücksichtigt sein. So kann beispielsweise die Unterstützungsleistung 25a abhängig von der Luftwiderstandscharakteristik 172 so gesteuert werden, dass das Fahrrad einen kleineren und leichteren Fahrer emuliert.

Dies ist insbesondere vorteilhaft, wenn zusätzlich die Trägheitscharakteristik 180 die Differenzen unterschiedlicher Fahrermassen berücksichtigt. So führt beispielsweise eine geringere Fahrermasse zu einem spritzigeren Beschleunigungsverhalten. Jedoch kann selbstverständlich auch nur für sich die Trägheitscharakteristik 180 verwendet werden.

Insgesamt lässt sich auf diese Weise das Fahrrad mit Hilfe der Unterstützungsleistung 25a so steuern, als ob es von einer anderen Person angetrieben wird. Zusätzlich kann auch eine für diese Person typische Leistungskurve als Fahrradtypen-Emulationskurve 200 hinterlegt sein, anhand der der Hilfsantrieb 22 gesteuert wird. So lässt sich beispielsweise das Fahrrad mit der Leistungscharakteristik eines Profiradfahrers fahren.

Unabhängig von der Trägheitscharakteristik 180 lässt sich eine ähnliche Emulation auch für unterschiedliche Fahrräder durchführen. So kann in der Trägheitscharakteristik 180 der Unterschied des Gewichts des Fahrrades 64 und eines anderen, zu emulierenden Fahrrades berücksichtigt sein, bzw. deren Gewichtsdaten 161. So lässt sich beispielsweise beim Fahrrad 64 das Fahrverhalten eines leichten Rennrades emulieren. Dies kann unabhängig voneinander auch durch eine Berücksichtigung der Luftwiderstandscharakteristik 178 des zu emulierenden Fahrradrahmens und/oder anderer Laufräder ergänzt sein.

Somit lassen sich durch die Fahrradtypen-Emulationskurve 200 und die darin berücksichtigten Charakteristiken unterschiedliche Radfahrer und Fahrräder emulieren. Außerdem lassen sich selektiv einzelne oder alle Verlustleistungen kompensieren.

Schließlich kann die Fahrradtypen-Emulationskurve 200 auch einen vorgegebenen zeitlichen Verlauf 202 der Tretleistung repräsentieren. Der Verlauf 202 kann mit einer oder mehreren Charakteristiken 150, 158, 166, 172, 178, 180 überlagert sein. Der vorbestimmte zeitliche Verlauf 202 kann beispielsweise ein Trainingsprogram sein, mit dem nacheinander unterschiedliche Tretleistungen abgefahren werden. In Abhängigkeit vom Verlauf 202 und vom Geländeverlauf kann dabei der Hilfsantrieb 22 abwechselnd im Generator- und im Motormodus betrieben werden. In Überlagerung mit einer der Charakteristiken 150 kann entweder die entsprechende Verlustleistung zusätzlich kompensiert oder der vorbestimmte Verlauf 202 lässt das Fahrrad 64 so reagieren, wie das emulierte Fahrrad.

In der Computervorrichtung 63 kann eine Grenzgeschwindigkeit 204 gespeichert sein, ab der die Unterstützungsleistung 25a auf einen vorbestimmten Wert begrenzt ist. Beispielsweise kann die Grenzgeschwindigkeit 204 25 km/h betragen. Überschreitet die Fahrgeschwindigkeit diese Grenzgeschwindigkeit, so wird beispielsweise die Unterstützungsleistung so eingestellt oder geregelt, dass ausschließlich und bevorzugt auch genau die vom Menschen aufgebrachte Tretleistung 25b an das Hinterrad 84 übertragen wird. Der Hilfsantrieb kompensiert in diesem Fall ausschließlich die einzelne Verlustenergien. So kann beispielsweise beim Überschreiten der Grenzgeschwindigkeit 204 die Verlustleistung 148 der Gangschaltung 4 und/oder optional zum Beispiel der Luftwiderstand des Fahrradfahrers 168 kompensiert werden. Alternativ kann auch bei Überschreiten der Grenzgeschwindigkeit 204 die Unterstützungsleistung 25a einer Leerlaufleistung des Hilfsantrieb entsprechen. In diesem Fall wird an der Stelle 24c keine zusätzliche Leistung der Tretleistung 25b hinzugefügt. Die vom Hilfsmotor 24a abgegebene Leistung kompensiert gerade die zwischen dem Hilfsmotor 24a und der Stelle 24c auftretenden Verluste.

Die Steuereinheit 62 bzw. die Computervorrichtung 63 kann auch einen Neigungssensor 206 aufweisen, der Steigungsdaten 207 ausgibt, die repräsentativ für die momentane Steigung ist. Die Steigung kann insbesondere in der Trägheitscharakteristik 180 mitberücksichtigt sein, so dass die Steigungsdaten 207 des Neigungssensors 206 dazu dienen können, die Unterstützungsleistung 25a auch in Abhängigkeit von den Steigungsdaten 207 zu steuern.

Fig. 4 zeigt eine qualitative Wiedergabe einer Fahrradtypen-Emulationskurve 200, die eine Rahmen-/Laufrad-Luftwiderstandscharakteristik 178 bzw. Luftwiderstandsdaten 179 darstellt.

Die Fahrradtypen-Emulationskurve 200 der Fig. 4 enthält die Rahmen-/Laufrad-Luftwiderstandscharakteristiken 178a bis 178e unterschiedlicher Fahrradrahmen. Der Luftwiderstand 174 bzw. die diesem entsprechende Leistungsverlust P_{V} ergibt sich aus der Rahmen-/Laufrad-Luftwiderstandscharakteristik 178 in Abhängigkeit von der Fahrgeschwindigkeit v, die insbesondere durch die Fahrgeschwindigkeitsdaten 147 repräsentiert ist. Weist beispielsweise das mit der Computervorrichtung 63 versehene Fahrrad 64 eine Rahmen-/Laufrad-Luftwiderstandscharakteristik 178e auf, so ergibt sich für diesen Rahmen und eine momentane Fahrgeschwindigkeit v₀ eine durch den Luftwiderstand des Rahmens und der Laufräder verursachte absolute Verlustleistung Pᵥ₀. Wird die Unterstützungsleistung 25a allein mit Hilfe der Luftwiderstandscharakteristik 178e bzw. den Luftwiderstandsdaten 179 gesteuert, so kann diese absolute Verlustleistung P_{V0} exakt kompensiert werden. Auf die gleiche Weise können mithilfe der Körperdaten 171 anhand empirisch ermittelter Luftwiderstandscharakteristiken für unterschiedliche Radfahrer die entsprechenden absoluten oder relativen Leistungsverluste kompensiert werden.

Ein anderer Rahmen mit der Charakteristik 178c würde bei der Geschwindigkeit v₀ zu einer absoluten Verlustleistung P_{V1} führen. Die Differenz von P_{V0} und P_{V1}, die positiv oder negativ sein kann, ist in Fig. 4 mit ΔP_{V0} bezeichnet. Soll also ausgehend von einem Fahrrad mit der Charakteristik 178e bei der Geschwindigkeit v₀ der Rahmen, gegebenenfalls mit Laufrädern, emuliert werden, dessen Luftwiderstand der Charakteristik 178c folgt, so muss die Unterstützungsleistung 25a so gesteuert werden, dass sie der Verlustleistung ΔP_{V0} entspricht. Dies gilt im Übrigen für jede Geschwindigkeit v₀, so dass auf diese einfache Weise ein anderer Fahrradrahmen emuliert werden kann. Die Rahmen-/Laufrad-Luftwiderstandscharakteristiken 178a bis 178e können für die unterschiedlichen Rahmen und/oder Laufräder einfach experimentell bestimmt werden, beispielsweise in einem Windkanal.

Das mit Hilfe der Fig. 4 anhand einer Luftwiderstandcharakteristik dargelegte Verfahren zur Kompensation der absoluten Verlustleistung P_{V} oder einer relativen Verlustleistung ΔP_{V} lässt sich auf jede beliebige andere Charakteristik 150, 158, 166, 172, 182 sowie Kombinationen davon beliebig übertragen, unabhängig davon, von wie vielen und von welchen Parametern diese Charakteristiken abhängen.

So sind beispielsweise in der Fig. 5 Rollwiderstandcharakteristiken 158 unterschiedlicher Reifen, repräsentiert durch Rollwiderstandsdaten 159, und Trägheitscharakteristiken 200 qualitativ für verschiedene Reifen (Rollwiderstandcharakteristik 158) und verschiedene kombinierte Fahrrad-und Radfahrergewichte (Trägheitscharakteristik 180) dargestellt. Die Trägheitscharakteristiken 180 verschiedener Fahrräder sind zudem für zwei verschiedene Steigungswinkel 180a und 180b aufgetragen. Unterschiedlichen Gewichtsdaten 161 sind unterschiedliche Trägheitscharakteristiken 180 zugeordnet.

Auf die gleiche Weise wie in Fig. 4 lässt sich für eine momentane Fahrgeschwindigkeit v₀ der Rollwiderstand des beim Fahrrad 64 tatsächlich montierten Reifens anhand der Rollwiderstandcharakteristik 158 als absolute Verlustleistung P_{V} ermitteln und kompensieren. Alternativ lässt sich eine Differenz der Verlustleistungen ΔP_{V} des derzeit montierten Reifens und eines anderen, zu emulierenden Reifens als relative Verlustleistung ΔP_{V} ermitteln.

Um ein anderes Fahrrad und/oder einen anderen Radfahrer und/oder eine andere Steigung zu emulieren, kann durch eine vom Neigungssensor 206 erfasste und durch die Steigungsdaten 207 repräsentierte Steigung in Abhängigkeit von der momentanen Fahrgeschwindigkeit wieder die absolute oder die relative Verlustleistung von der Computervorrichtung 63 ermittelt und die Unterstützungsleistung 25a entsprechend angepasst werden.

In Fig. 6 sind qualitative Darstellungen der Gangschaltungscharakteristiken 150 zweier unterschiedlicher Gangschaltungen gezeigt. Die Gangschaltungscharakteristik 150a zeigt den Leistungsverlust P_{V} abhängig von dem an einem Getriebeeingang 10 (Fig. 1) anliegenden Drehmoment M. Diese Gangschaltungscharakteristik 150a zeigt die gangabhängigen Verluste. Jeder Gang weist bei beispielsweise drei Gängen eine unterschiedliche Kurve 150a-1, 150a-2, 150a-3 auf. Die Gangschaltungscharakteristik 150b enthält die vom am Getriebeeingang 10 anliegenden Moment M abhängige Verlustleistung P_{V} eines anderen Getriebes für die dort bereitgestellten Gänge, die das gleiche oder ein anderen Übersetzungsverhältnis aufweisen können. Auch hier weist jeder Gang eine andere Kurve 150b-1, 150b-2 und 150b-3 auf. Abhängig von dem von der Gangschaltung 4 bereitgestellten Übersetzungsverhältnis, das in den Schaltungsdaten 151 repräsentiert ist, kann mit der Gangschaltungscharakteristik 150 der Fig. 6 die Unterstützungsleistung 25a entweder so gesteuert werden, dass die jeweils vorliegende vom Übersetzungsverhältnis und vom eingangsseitigen Drehmoment M abhängige Verlustleistung kompensiert wird oder nur die relative Verlustleistung zu der anderen Gangschaltung. Es lassen sich auch andere Übersetzungsverhältnisse simulieren. Nicht gezeigt ist in Fig. 6, dass die Gangschaltungscharakteristiken 150a, 150b der beiden Schaltgetriebe auch von der eingangsseitig vorliegenden Drehzahl abhängen können. Die Gangschaltungscharakteristiken können optional zusätzlich auch noch weitere Parameter repräsentieren. Beispielhaft seien an dieser Stelle Temperatur und Betriebszeit oder elektronisch in der Computervorrichtung 63 generierte mathematische Zeitableitungen oder Transformationen der oben genannten Parameter genannt.

Aus der Zusammenschau der Figuren 4 bis 6 ergibt sich, dass die einzelnen Fahrradtypen-Emulationskurven 200 einfach miteinander kombiniert werden können, indem einfach die jeweiligen absoluten oder relativen Verlustleistungen addiert werden.

Die Computervorrichtung 63 in dem dargestellten Ausführungsbeispiel arbeitet in Echtzeit, so dass die Steuerdaten 153 bzw. die Unterstützungsleistung 25a sofort und ohne für den Radfahrer erkennbare Verzögerung vorliegen, wenn sich ein oder mehrere Eingangsparameter der Fahrradtypen-Emulationskurve 200 ändern.

### Bezugszeichen

- 1: Tretlagereinheit
- 2: Kraftfluss
- 4: Gangschaltung
- 6: Tretlagerwelle
- 8: Eingangswelle
- 10: Getriebeeingang
- 14: Eingangsstufe
- 16: antriebsseitiges Eingangsrad
- 18: abtriebsseitiges Eingangsrad
- 20: Freilauf
- 20a: weiterer Freilauf
- 22: Hilfsantrieb
- 24a: Hilfsmotor
- 24b: Untersetzungsgetriebe
- 24c: Stelle, an der Unterstützungsleistung und Tretleistung addiert werden
- 24d: Batterie
- 25a: Unterstützungsleistung
- 25b: Tretleistung
- 25c: Summe aus Tretleistung und Unterstützungsleistung
- 25d: Abtriebsleistung
- 26: Tretleistungs-, Tretmoment- und/oder Trittfrequenzsensor
- 28: Tretleistungs-, Tretmoment- und/oder Trittfrequenzdaten
- 30: eingangsseitige Hohlwelle
- 32: Gehäuse
- 32a: Gehäuseteil
- 32b: Gehäuseteil
- 34: Getriebeausgang
- 36: Ausgangsstufe
- 38: antriebsseitiges Ausgangsrad
- 40: abtriebsseitiges Ausgangsrad
- 42: Ausgangswelle der Gangschaltung
- 44: ausgangsseitige Hohlwelle
- 48: Antriebsrad
- 50: Zugmittel
- 52: axiale Richtung
- 54: Seite des Gehäuses
- 56: Gehäuse der Gangschaltung
- 58: Lagerstellen der Getriebewellen
- 60: Befestigungsstellen des Gehäuses
- 62: Steuereinheit des Hilfsantriebs
- 63: Computervorrichtung
- 64: Fahrrad
- 66: Rahmen
- 68: Unterrohr
- 70: Oberrohr
- 72: Sitzrohr
- 74: Tretlager
- 76: Bereich
- 78: Kurbel
- 80: Pedal
- 82: Zahnriemen
- 84: Hinterrad
- 86: Schaltelement
- 88: Lenker
- 100: Tretkraft
- 102: Tretmoment
- 108: Tretmomentsensor
- 110: Trittfrequenzsensor
- 112: Leistungssensor
- 114: Tretmomentdaten
- 116: Datenübertragungsstrecke
- 118: Trittfrequenzdaten
- 120: Tretleistungsdaten
- 122: Pfeil
- 124: Verlustleistung im Untersetzungsgetriebe des Hilfsantriebs
- 126: Antriebsverlustcharakteristik
- 134: Abtriebsleistungssensor
- 136: Abtriebsleistungsdaten
- 138: Abtriebsmomentsensor
- 140: Abtriebsmoment
- 142: Abtriebsmomentdaten
- 144: Abtriebsfrequenzsensor
- 145: Positionssensor
- 146: Antriebsfrequenzdaten
- 147: Fahrgeschwindigkeitsdaten
- 148: Verlustenergie der Gangschaltung
- 150: Gangschaltungscharakteristik
- 150a, 150b: Gangschaltungscharakteristik unterschiedlicher Gangschaltungen
- 151: Schaltungsdaten
- 152: Gangschaltungssensor
- 153: Steuerdaten
- 154: Reifen
- 156: Verlustenergie durch Rollwiderstand
- 158: Rollwiderstandscharakteristik
- 159: Rollwiderstandsdaten
- 160: Speicher
- 162: Verlustenergie durch Antriebsmittel
- 164: Antriebsmittel
- 166: Antriebsmittelcharakteristik
- 168: Radfahrer
- 170: Luftwiderstand des Radfahrers
- 171: Körperdaten
- 172: Luftwiderstandscharakteristik des Radfahrers
- 174: Luftwiderstand des Fahrradrahmens und/oder der Laufräder
- 178: Rahmen-/Laufrad-Luftwiderstandscharakteristik
- 178a-178e: Rahmen-/Laufrad-Luftwiderstandscharakteristiken unterschiedlicher Rahmen und/oder Laufräder
- 179: Luftwiderstandsdaten
- 180: Trägheitscharakteristik
- 180a, 180b: Trägheitscharakteristiken für unterschiedliche Steigungen
- 182: träge Fahrer-Fahrradmasse
- 184: Verlustenergie durch Trägheit
- 200: Fahrradtypen-Emulationskurve
- 202: vorbestimmter zeitlicher Verlauf der Tretleistung
- 204: Grenzgeschwindigkeit
- 206: Neigungssensor
- 207: Steigungsdaten
- v, v₀: Fahrgeschwindigkeit
- P_{V}, Pᵥ₀, P_{V1}: Leistungsverlust
- M: Moment

## Patentansprüche

1. Computervorrichtung (63) zur Steuerung eines Hilfsantriebs (22) eines mit einer mechanischen Gangschaltung (4) versehenen Fahrrades (64), wobei die Computervorrichtung (63) ausgestaltet ist, die folgenden Schritte auszuführen:
- Empfangen von Tretmomentdaten (114), die repräsentativ für ein von einem Radfahrer (168) erzeugtes Drehmoment sind;
- Empfangen von Trittfrequenzdaten (118), die repräsentativ für eine Trittfrequenz des Radfahrers (168) sind;
- Ermitteln einer Unterstützungsleistung (25a);
- Ausgeben von Steuerdaten (153) für den Hilfsantrieb (22), wobei die Steuerdaten (153) repräsentativ sind für die Erzeugung einer bestimmten den Steuerdaten (153) zugeordneten Unterstützungsleistung (25a) durch den Hilfsantrieb (22);
**dadurch gekennzeichnet, dass** die Unterstützungsleistung in Abhängigkeit von den Tretmomentdaten (114), den Trittfrequenzdaten (118) und einer in der Computervorrichtung (63) gespeicherten Fahrradtypen-Emulationskurve (200) ermittelt wird.

2. Computervorrichtung (63) nach Anspruch 1, wobei die Computervorrichtung (63) ausgestaltet ist, den folgenden Schritt auszuführen:
- Ermitteln der Unterstützungsleistung (25a) auch in Abhängigkeit von Schaltungsdaten (151), die repräsentativ für ein momentanes Übersetzungsverhältnis der Gangschaltung (4) sind.

3. Computervorrichtung (63) nach Anspruch 1 oder 2, wobei die Computervorrichtung (63) ausgestaltet ist, den folgenden Schritt auszuführen:
- Ermitteln der Unterstützungsleistung (25a) auch in Abhängigkeit von gespeicherten Körperdaten, die repräsentativ für Körpermaße des Radfahrers (168) sind.

4. Computervorrichtung (63) nach einem der Ansprüche 1 bis 3, wobei die Computervorrichtung (63) ausgestaltet ist, den folgenden Schritt auszuführen:
- Ermitteln der Unterstützungsleistung (25a) auch in Abhängigkeit von Fahrgeschwindigkeitsdaten (147), die repräsentativ für eine momentane Fahrgeschwindigkeit (v) des Fahrrades (64) sind.

5. Computervorrichtung (63) nach einem der Ansprüche 1 bis 4, wobei die Computervorrichtung (63) ausgestaltet ist, den folgenden Schritt auszuführen:
- Ermitteln der Unterstützungsleistung (25a) auch in Abhängigkeit der Steigungsdaten (207), die repräsentativ für eine momentan befahrene Steigung sind.

6. Computervorrichtung (63) nach einem der Ansprüche 1 bis 5, wobei die Computervorrichtung (63) ausgestaltet ist, die Unterstützungsleistung (25a) abhängig von der Fahrgeschwindigkeit (v) auf einen vorbestimmten Maximalwert zu begrenzen.

7. Computervorrichtung (63) nach Anspruch 6, wobei der vorbestimmte Maximalwert die Leerlaufleistung des Hilfsantriebs (22) ist.

8. Hilfsantrieb (22) für ein Fahrrad (64) mit einer mechanischen Gangschaltung (4), wobei der Hilfsantrieb (22) eine Computervorrichtung (63) nach einem der Ansprüche 1 bis 7 aufweist.

9. Hilfsantrieb (22) nach Anspruch 8, wobei der Hilfsantrieb (22) einen Tretmomentsensor (108) aufweist, der ausgestaltet ist, Tretmomentdaten (114) zu erzeugen, die repräsentativ sind für ein vom Radfahrer (168) erzeugtes Tretmoment (102), und wobei der Hilfsantrieb (22) einen Trittfrequenzsensor (110) aufweist, der ausgebildet ist, Trittfrequenzdaten (118) zu erzeugen, die repräsentativ für eine Trittfrequenz des Radfahrers (168) sind, und wobei der Tretmomentsensor (108) und der Trittfrequenzsensor (110) mit der Computervorrichtung (63) datenübertragend verbunden sind.

10. Hilfsantrieb (22) nach Anspruch 8 oder 9 mit einer mechanischen Gangschaltung (4) und mit einem Abtriebsleistungssensor (134), der im Kraftfluss (2) hinter der Gangschaltung (4) angeordnet ist.

11. Hilfsantrieb (22) nach einem der Ansprüche 8 bis 10, wobei die Gangschaltung (4) mit einem Hilfsmotor (24a) baulich in einem gemeinsamen Gehäuse (32) vereint ist.

12. Fahrrad (64) mit einer Tretlagerwelle (6), einer mechanischen Gangschaltung (4) und entweder mit einem Hilfsantrieb (22) und einer Computervorrichtung (63) nach einem der Ansprüche 1 bis 7, oder mit einem Hilfsantrieb (22) nach einem der Ansprüche 8 bis 11, wobei der Hilfsantrieb (22), die Gangschaltung (4) und die Tretlagerwelle (6) drehmomenttragend mechanisch miteinander gekoppelt sind.

13. Computerimplementiertes Verfahren zum Steuern eines Hilfsantriebs (22) eines eine mechanische Gangschaltung (4) aufweisenden Fahrrades (64) umfassend die folgenden Schritte:
- Empfangen von Tretmomentdaten (114), die repräsentativ für ein von einem Radfahrer (168) erzeugtes Drehmoment sind;
- Empfangen von Trittfrequenzdaten (118), die repräsentativ für eine Trittfrequenz des Radfahrers (168) sind;
- Ermitteln einer Unterstützungsleistung (25) in Abhängigkeit von den Tretmomentdaten (114), den Trittfrequenzdaten (118) und einer in der Computervorrichtung (63) gespeicherten Fahrradtypen-Emulationskurve (200);
- Ausgeben von Steuerdaten (153) für den Hilfsantrieb (22), wobei die Steuerdaten (153) repräsentativ sind für die Erzeugung einer bestimmten den Steuerdaten (153) zugeordneten Unterstützungsleistung (25a) durch den Hilfsantrieb (22).

14. Computerprogramm umfassend Befehle, die bei der Ausführung des Programms durch einen Computer diesen veranlassen, das Verfahren nach Anspruch 13 auszuführen.

15. Computerlesbares Speichermedium, umfassend Befehle, die bei der Ausführung durch einen Computer, diesen veranlassen, das Verfahren nach Anspruch 13 auszuführen.

## Claims

1. Computing device (63) for controlling an assistance drive (22) of a bicycle (64) provided with a mechanical gearshift (4), wherein the computing device (63) is configured to perform the following steps:
- receiving pedalling moment data (114) representative of a torque generated by a cyclist (168);
- receiving pedalling frequency data (118) representative of a pedalling frequency of the cyclist (168);
- determining an assisting power (25a);
- outputting control data (153) for the assistance drive (22), wherein the control data (153) are representative of the generation of a specific assisting power (25a) by the assistance drive (22) corresponding to the control data (153);
**characterized in that** the assisting power is determined as a function of the pedalling moment data (114), the pedalling frequency data (118) and a bicycle type emulation characteristic (200) stored in the computing device (63).

2. Computing device (63) according to claim 1, wherein the computing device (63) is configured to perform the following step:
- further determining the assisting power (25a) as a function of gear shifting data (151) representative of a current gear ratio of the gearshift (4).

3. Computing device (63) according to claims 1 or 2, wherein the computing device (63) is configured to perform the following step:
- further determining the assisting power (25a) as a function of stored body data, representative of body dimensions of the cyclist (168).

4. Computing device (63) according to any one of claims 1 to 3, wherein the computing device (63) is configured to perform the following step:
- further determining the assisting power (25a) as a function of driving speed data (147) representative of a current driving speed (v) of the bicycle (64).

5. Computing device (63) according to any one of claims 1 to 4, wherein the computing device (63) is configured to perform the following step:
- further determining the assisting power (25a) in accordance with gradient data (207) representative of a gradient currently covered.

6. Computing device (63) according to any one of claims 1 to 5, wherein the computing device (63) is configured to limit the assisting power (25a) to a predetermined maximum value as a function of the driving speed (v).

7. Computing device (63) according to claim 6, wherein the predetermined maximum value is the idle power of the assistance drive (22).

8. Assistance drive (22) for a bicycle (64) comprising a mechanical gearshift (4), wherein the assistance drive (22) includes a computing device (63) according to any one of claims 1 to 7.

9. Assistance drive (22) according to claim 8, wherein the assistance drive (22) includes a pedalling moment sensor (108) configured to generate pedalling moment data (114) representative of a pedalling moment (102) generated by the cyclist (168), and wherein the assistance drive (22) includes a pedalling frequency sensor (110) configured to generate pedalling frequency data (118) representative of a pedalling frequency of the cyclist (168), and wherein the pedalling moment sensor (108) and the pedalling frequency sensor (110) are connected in data communication with the computing device (63).

10. Assistance drive (22) according to claims 8 or 9 comprising a mechanical gearshift (4) and an output sensor (134) provided downstream of the gearshift (4) in the direction of power flow (2).

11. Assistance drive (22) according to any one of claims 8 to 10, wherein the gearshift (4) is structurally integrated with an assistance motor (24a) in a common housing (32).

12. Bicycle (64) comprising a pedal bearing shaft (6), a mechanical gearshift (4) and either comprising an assistance drive (22) and a computing device (63) according to any one of claims 1 to 7, or comprising an assistance drive (22) according to any one of claims 8 to 11, wherein the assistance drive (22), the gearshift (4) and the pedal bearing shaft (6) are mechanically coupled to each other for torque transfer.

13. Computer-implemented method for controlling an assistance drive (22) of a bicycle (64) including a mechanical gearshift (4) comprising the following steps:
- receiving pedalling moment data (114) representative of a torque produced by a cyclist (168);
- receiving pedalling frequency data (118) representative of a pedalling frequency of the cyclist (168);
- determining an assisting power (25a) as a function of the pedalling moment data (114), the pedalling frequency data (118) and a bicycle type emulation characteristic (200) stored in the computing device (63);
- outputting control data (153) for the assistance drive (22), wherein the control data (153) are representative of the generation of a specific assisting power (25a) by the assistance drive (22) corresponding to the control data (153).

14. Computer program comprising instructions causing a computer to perform the method according to claim 13 when executing the program.

15. Computer readable storage medium comprising instructions which when executed by a computer cause the same to perform the method according to claim 13.

## Revendications

1. Dispositif informatique (63) permettant de commander un entraînement auxiliaire (22) d'une bicyclette (64) équipée d'un changement de vitesse mécanique (4), dans lequel le dispositif informatique (63) est conçu pour mettre en œuvre les étapes ci-dessous consistant à :
- recevoir des données de couple de pédalage (114) qui sont représentatives d'un couple généré par un cycliste (168) ;
- recevoir des données de cadence de pédalage (118) qui sont représentatives d'une cadence de pédalage du cycliste (168) ;
- déterminer une puissance d'assistance (25a) ;
- émettre des données de commande (153) destinées à l'entraînement auxiliaire (22), les données de commande (153) étant représentatives de la génération, grâce à l'entraînement auxiliaire (22), d'une puissance d'assistance (25a) spécifique associée aux données de commande (153) ;
**caractérisé en ce que** la puissance d'assistance est déterminée en fonction des données de couple de pédalage (114), des données de cadence de pédalage (118) et d'une courbe d'émulation de type de bicyclette (200) mémorisée dans le dispositif informatique (63).

2. Dispositif informatique (63) selon la revendication 1, dans lequel le dispositif informatique (63) est conçu pour mettre en œuvre l'étape ci-dessous consistant à :
- déterminer la puissance d'assistance (25a) également en fonction de données de changement de vitesse (151) qui sont représentatives d'un rapport de démultiplication instantané du changement de vitesse (4).

3. Dispositif informatique (63) selon la revendication 1 ou 2, dans lequel le dispositif informatique (63) est conçu pour mettre en œuvre l'étape ci-dessous consistant à :
- déterminer la puissance d'assistance (25a) également en fonction de données corporelles mémorisées qui sont représentatives de mesures corporelles du cycliste (168).

4. Dispositif informatique (63) selon l'une quelconque des revendications 1 à 3, dans lequel le dispositif informatique (63) est conçu pour mettre en œuvre l'étape ci-dessous consistant à :
- déterminer la puissance d'assistance (25a) également en fonction de données de vitesse de déplacement (147) qui sont représentatives d'une vitesse de déplacement (v) instantanée de la bicyclette (64).

5. Dispositif informatique (63) selon l'une quelconque des revendications 1 à 4, dans lequel le dispositif informatique (63) est conçu pour mettre en œuvre l'étape ci-dessous consistant à :
- déterminer la puissance d'assistance (25a) également en fonction de données de pente (207) qui sont représentatives d'une pente actuellement parcourue.

6. Dispositif informatique (63) selon l'une quelconque des revendications 1 à 5, dans lequel le dispositif informatique (63) est conçu pour limiter la puissance d'assistance (25a) à une valeur maximale prédéterminée en fonction de la vitesse de déplacement (v).

7. Dispositif informatique (63) selon la revendication 6, dans lequel la valeur maximale prédéterminée est la puissance à vide de l'entraînement auxiliaire (22).

8. Entraînement auxiliaire (22) pour une bicyclette (64) équipée d'un changement de vitesse mécanique (4), dans lequel l'entraînement auxiliaire (22) comprend un dispositif informatique (63) selon l'une quelconque des revendications 1 à 7.

9. Entraînement auxiliaire (22) selon la revendication 8, dans lequel l'entraînement auxiliaire (22) présente un capteur de couple de pédalage (108) qui est conçu pour générer des données de couple de pédalage (114) qui sont représentatives d'un couple de pédalage (102) généré par le cycliste (168), et dans lequel l'entraînement auxiliaire (22) présente un capteur de fréquence de pédalage (110) qui est conçu pour générer des données de fréquence de pédalage (118) qui sont représentatives d'une fréquence de pédalage du cycliste (168), et dans lequel le capteur de couple de pédalage (108) et le capteur de fréquence de pédalage (110) sont connectés au dispositif informatique (63) de manière à pouvoir transmettre des données.

10. Entraînement auxiliaire (22) selon la revendication 8 ou 9, comprenant un changement de vitesse mécanique (4) et un capteur de puissance de sortie (134) qui est agencé dans le flux de force (2) derrière le changement de vitesse (4).

11. Entraînement auxiliaire (22) selon l'une quelconque des revendications 8 à 10, dans lequel le changement de vitesse (4) est structurellement réuni au moteur auxiliaire (24a) au sein d'un carter commun (32).

12. Bicyclette (64) comprenant un arbre de pédalier (6) et un changement de vitesse mécanique (4) et comprenant soit un entraînement auxiliaire (22) et un dispositif informatique (63) selon l'une quelconque des revendications 1 à 7, soit un entraînement auxiliaire (22) selon l'une quelconque des revendications 8 à 11, l'entraînement auxiliaire (22), le changement de vitesse (4) et l'arbre de pédalier (6) étant couplés mécaniquement les uns aux autres de manière à supporter le couple.

13. Procédé mis en œuvre par ordinateur et permettant de commander un entraînement auxiliaire (22) d'une bicyclette (64) présentant un changement de vitesse mécanique (4), comprenant les étapes ci-dessous consistant à :
- recevoir des données de couple de pédalage (114) qui sont représentatives d'un couple généré par un cycliste (168) ;
- recevoir des données de cadence de pédalage (118) qui sont représentatives d'une cadence de pédalage du cycliste (168) ;
- déterminer une puissance d'assistance (25) en fonction des données de couple de pédalage (114), des données de fréquence de pédalage (118) et d'une courbe d'émulation de type de bicyclette (200) mémorisée dans le dispositif informatique (63) ;
- émettre des données de commande (153) destinées à l'entraînement auxiliaire (22), les données de commande (153) étant représentatives de la génération, grâce à l'entraînement auxiliaire (22), d'une puissance d'assistance (25a) spécifique associée aux données de commande (153) ;

14. Programme informatique comprenant des instructions qui, lors de l'exécution du programme par un ordinateur, amènent ledit ordinateur à mettre en œuvre le procédé selon la revendication 13.

15. Support de stockage lisible par ordinateur, comprenant des instructions qui, lorsqu'elles sont exécutées par un ordinateur, amènent ledit ordinateur à mettre en œuvre le procédé selon la revendication 13.
